# EUROPEAN PATENT APPLICATION

(11) **EP 1 635 415 A1**
(43) Date of publication of application: **15.03.2006**
(21) Application number: 05108146.1
(22) Date of filing: 06.09.2005
(51) Int. Cl.: H01M 8/24

(54) **Fuel cell stack**

(30) Priority: 08.09.2004 KR 2004071655; 21.04.2005 KR 2005033117; 21.04.2005 KR 2005033118; 21.04.2005 KR 2005033124
(71) Applicant: Samsung SDI Co., Ltd., Suwon-si Gyeonggi-do (KR)
(72) Inventor: Lee, Sang-Won, c/o Samsung SDI Co., LTD., Yongin-City, Kyeonggi-Do (KR)
(74) Representative: Hengelhaupt, Jürgen

(57) **Abstract**

A fuel cell stack includes at least one electricity generating element that generates electrical energy through a reaction of fuel and oxygen, the electricity generating element including a membrane-electrode assembly, separators respectively positioned at both sides of the membrane-electrode assembly, and conducting elements respectively positioned between the separators and the membrane-electrode assembly and capable of enabling electrons, which are generated in the membrane-electrode assembly, to transfer through the fuel cell stack.

## Description

### FIELD OF THE INVENTION

The present invention relates to a fuel cell stack, and more particularly, to a fuel cell stack including a metal separator.

### BACKGROUND OF THE INVENTION

A fuel cell is a power generation system that directly generates electrical energy from oxidation of hydrogen in a hydrocarbon-based fuel and reduction of oxygen.

The fuel cell can be classified as either a polymer electrolyte membrane fuel cell or a direct oxidation fuel cell.

The polymer electrolyte membrane fuel cell is composed of a stack forming a fuel cell body (hereinafter, referred to as stack) and generates electrical energy through oxidation of hydrogen supplied from a reformer and reduction of oxygen supplied through operation of an air-pump or fan. Herein, the reformer is referred to as a fuel processor which reforms a fuel to generate hydrogen and supplies the hydrogen to a stack.

In the direct oxidation fuel cell, a fuel is directly supplied to a stack. Thus, unlike the polymer electrolyte membrane fuel cell, the direct oxidation fuel cell does not require a separate reformer. The direct oxidation fuel cell generates electrical energy from electrochemical oxidation of hydrogen, included in the fuel, and electrochemical reduction of oxygen, supplied separately.

In a fuel cell, the stack has a structure in which several to several tens of unit cells, composed of a membrane-electrode assembly (hereinafter, referred to as MEA) and separators (also referred to as bipolar plates), are stacked to one another. Each MEA is composed of an anode, a cathode, and an electrolyte membrane interposed therebetween. The separators are positioned at both sides of the MEA, and function as passage paths for supplying hydrogen (or fuel) and oxygen to the MEA, and as conductors for connecting the anodes and the cathodes of the MEAs in series.

Accordingly, hydrogen or fuel is supplied to the anode of an MEA through one separator and oxygen is supplied to the cathode of the MEA through another separator. At the anode, electrochemical oxidation of hydrogen or fuel occurs, and at the cathode, electrochemical reduction of oxygen occurs. As a result of the transfer of the electrons generated during the reaction, electrical energy is obtained in the stack.

A conventional stack of a fuel cell, where electron transfer occurs as described above, is disclosed in Japanese Patent Publication Nos. 1994-60905, 1996-138699, 2000-58074, 2000-164234, and 2001-006702. In the above publications, each unit cell is electrically connected to a separator itself or to a separate external terminal that is connected to a separator to generate electrical energy having a predetermined potential difference.

However, separators of a unit cell in the conventional stack of a fuel cell are made of graphite or carbon composite and thus, fabrication processes of the separators are very complicated, and therefore the cost is very high and unfavorable from an economical view.

### SUMMARY OF THE INVENTION

An embodiment of the present invention provides a fuel cell stack that includes metal separators and/or a fuel cell that includes an improved electrical connection structure.

According to an exemplary embodiment of the present invention, a fuel cell stack includes at least one electricity generating element which generates electrical energy through a reaction of fuel and oxygen and the electricity generating element includes a membrane-electrode assembly (MEA), separators respectively positioned at both sides of the MEA, and conducting elements respectively positioned between the separators and the membrane-electrode assembly and capable of enabling electrons, which are generated in the membrane-electrode assembly, to transfer through the fuel cell stack.

In the fuel cell stack, the conducting elements includes at least one gas diffusion layer, which is positioned between a separator and the membrane-electrode assembly, and at least one region extended from the gas diffusion layer, adjacent to the separator and outside of at least one edge of the separator. The extended region may be a terminal region.

The fuel cell stack may include connectors that are connected to the conducting elements to electrically connect areas between conducting elements.

The fuel cell stack may include first insulating elements, which substantially insulate each conducting element of each electricity generating element to prevent an electrical short circuit within each electrically generating element.

The fuel cell stack may include current collecting plates which are positioned closely adjacent to outermost ones of the separators and are electrically connected to the conducting elements of the outermost ones of the separators.

The fuel cell stack may include second insulating elements that are positioned between the outermost ones of the separators and the current collecting plates to substantially insulate them.

In the fuel cell stack, the electricity generating element may be stacked adjacent to another electricity generating element to form a stack structure. A connector is positioned between terminal regions of the electricity generating element and the another electricity generating element to connect the adjacent electricity generating elements in series.

The connector of the fuel cell stack may be made of a conductive carbon material, and has a block shape. The connector may be mounted between the terminal regions.

The connector of the fuel cell stack may be made of at least one conductive metal selected from the group consisting of aluminum, copper, nickel, iron, and alloys thereof.

The connectors of the fuel cell stack may include rivets for substantially connecting the terminal regions. Washers may be mounted between the connectors and the terminal regions.

The connectors of the fuel cell stack may include bolts and nuts which substantially connect the terminal regions. Washers may be mounted between the connectors and the terminal regions.

The separators of the fuel cell stack may be made of a metal material.

The separators of the fuel cell stack may include a fuel passage path positioned adjacent to a first gas diffusion layer contacting one side of the membrane-electrode assembly, and an oxygen passage path positioned adjacent to a second gas diffusion layer contacting another side of the membrane-electrode assembly.

The separators in the fuel cell stack may each include a fuel passage path on one side thereof and an oxygen passage path on another side thereof.

In the fuel cell stack, the electricity generating element may be stacked adjacent to another electricity generating element to form a stack structure and a third insulating element is positioned between one of the separators of the electricity generating element and an adjacent separator of the another electricity generating element to substantially insulate the one of the separators of the electricity generating element and the adjacent separator of the another electricity generating element.

The passage paths of the separators may be formed by press-processing a plate-shaped metal.

The separators may be made of at least one metal selected from the group consisting of aluminum, copper, iron, nickel, cobalt, and alloys thereof.

The separators may be made of a low-conductive material having a relatively lower conductivity than carbon material. The low conductive material may be selected from the group consisting of a ceramic material, a polymer material, a synthetic resin material, a rubber material, and combinations thereof.

The gas diffusion layer may be made of at least one material selected from the group consisting of carbon composite sheet, carbon paper, and carbon cloth.

According to one exemplary embodiment of the present invention, the conducting elements may include gas diffusion layers respectively disposed to oppose each other at both sides of the membrane-electrode assembly, and regions extended out of at least one edge of the separators. The extended regions may be terminal regions.

Each conducting element may include a sealing member to block the fuel and/or oxygen from diffusing out of the membrane-electrode assembly. The sealing member may be formed at corresponding edges of the membrane-electrode assembly and may be made of a polymer material and/or a rubber material.

According to another exemplary embodiment of the present invention, the conducting elements include a plurality of multi-layered gas diffusion layers respectively disposed to oppose each other at both sides of the membrane-electrode assembly, each of the plurality of multi-layered gas diffusion layers includes an outermost gas diffusion layer and an inner gas diffusion layer, and the outermost gas diffusion layer contacting a corresponding one of the separators includes a region extended outside of at least one edge of the corresponding one of the separators. The extended region may be a terminal region.

The inner gas diffusion layer contacting the membrane-electrode assembly has a size corresponding to the size of the membrane-electrode assembly. The inner gas diffusion layer may include a first sealing member to block the fuel and/or oxygen from diffusing out of the membrane-electrode assembly. The first sealing member may be formed at the edges of the inner gas diffusion layer corresponding to the edges of the membrane-electrode assembly and may be made of a polymer material and/or or a rubber material.

The outermost gas diffusion layer contacting the corresponding one of the separators may include a second sealing member adapted to block the fuel and/or oxygen from diffusing out of the membrane-electrode assembly. The second sealing member is formed corresponding to edges of the membrane-electrode assembly and is made of a polymer material and/or a rubber material.

According to another exemplary embodiment of the present invention, the fuel cell stack includes at least one electricity generating element that generates electrical energy through a reaction of fuel and oxygen. The electricity generating element includes a membrane-electrode assembly, separators respectively positioned adjacent to both sides of the membrane-electrode assembly, and conducting elements substantially surrounding the separators, respectively, and thereby enabling electrons generated in the membrane-electrode assembly to transfer through the fuel cell stack.

The conducting elements may be composed of a gas diffusion layer including portions respectively positioned adjacent to both sides of each of the separators and integrally connected with each other.

The gas diffusion layer may include a first portion positioned adjacent to one side of each of the separators, a second portion positioned adjacent to another side of each of the separators, and a third portion connecting the first portion to the second portion integrally and electrically as a connector.

The first and second portions may include a sealing member to block the fuel and/or oxygen from diffusing out of the membrane-electrode assembly. The sealing member may be formed at edges of the first portion and the second portions corresponding to an edge of the membrane-electrode assembly and may be made of a polymer material and/or a rubber material.

The gas diffusion layer may include bending members which are formed at a connection between the first and second portions and the third portion to bend the first and second portions. The bending members may be made of a material selected from the group consisting of a polymer material, a rubber material, and a metal material.

The fuel cell stack may include a first insulating element adapted to substantially insulate the conducting element to prevent an electrical short circuit within the electricity generating element.

The fuel cell stack may include current collecting plates respectively positioned adjacent to the conducting element substantially surrounding each outermost one of the separators and is electrically connected to the conducting element substantially surrounding the outermost one of the separators.

The fuel cell stack may include second insulating elements respectively positioned between an outermost portion of the conducting element surrounding the outermost ones of the separators and the outermost ones of separators, to substantially insulate the outermost portion of the conducting element surrounding the outermost ones of the separators and the outermost ones of the separators.

The separators of the fuel cell stack may include fuel passage paths positioned adjacent to gas diffusion layers contacting one side of the membrane-electrode assemblies, and oxygen passage paths positioned adjacent to second gas diffusion layers contacting another side of the membrane-electrode assemblies.

The separators in the fuel cell stack may each include a fuel passage path on one side thereof and an oxygen passage path on another side thereof.

In the fuel cell stack, the electricity generating element may be stacked adjacent to another electricity generating element to form a stack structure, and a third insulating element may be positioned between one of the separators of the electricity generating element and an adjacent separator of the another electricity generating element to substantially insulate the one of the separators of the electricity generating element and the adjacent separator of the another electricity generating element.

The separators are made of at least one material selected from the group consisting of a ceramic material, a polymer material, a synthetic resin material, and a metal material.

According to yet another exemplary embodiment of the present invention, the fuel cell stack includes at least one electricity generating element which generates electrical energy through a reaction of fuel and oxygen. The electricity generating element includes a membrane-electrode assembly (MEA), separators respectively positioned at both sides of the MEA, gas diffusion layers respectively positioned between the separators and the MEA and positioned to oppose each other, and conducting elements which are respectively connected to the gas diffusion layers and thus enable electrons generated in the membrane-electrode assembly to transfer through the fuel cell stack.

The conducting element may include terminal frames interposed between the separators and the gas diffusion layers, the terminal frames contacting the gas diffusion layers and having regions protruding out of at least one edge of the separators. The protruded regions may be terminal regions.

The fuel cell stack may include a connector which is mounted to connect to the conducting element and another conducting element of another electricity generating element and to electrically connect an area between the conducting element and the another conducting element.

The separators may be made of at least one material selected from the group consisting of a ceramic material, a polymer material, a synthetic resin material, and a metal material.

Each terminal frame may be made of a conductive carbon material.

In the fuel cell stack, each of the terminal frames may have a bar shape and may have a predetermined width and a predetermined length, and may include a first portion positioned adjacent to a gas diffusion layer and a second portion protruding out of at least one edge of the separators.

The terminal frame may include a connection groove to connect edges of the separators.

The terminal frame may be a square frame having an opening, and may include a first portion positioned adjacent to a corresponding one of a gas diffusion layer and a second portion protruding out of at least one edge of the separators.

The terminal frame may include a connection groove to connect edges of the separators.

In the fuel cell stack, the electricity generating element may be stacked adjacent to another electricity generating element to form a stack structure. Connectors may be mounted between the protruded regions of the terminal frames to connect the electricity generating elements in series.

The terminal frames may be made of a conductive carbon material having a block shape.

The connectors may include a lead member which is composed of a conductive plate-shaped metal.

The lead member may be made of at least one material selected from the group consisting of aluminum, nickel, copper, iron, and alloys thereof. The terminal frames may include a protrusion for positioning the lead member. The fuel cell stack may include first insulating elements, which are interposed between the terminal frames and the separators, to substantially insulate the terminal frames from the separators.

The fuel cell stack may include second insulating elements that substantially insulate the terminal frames in one electricity generating element.

The fuel cell stack may include current collecting plates that are positioned adjacent to outermost ones of the separators, and electrically connected to outermost ones of the terminal frames.

The fuel cell stack may include third insulating elements that are positioned between the outermost ones of the separators and the current collecting plates to substantially insulate them.

The separators of the fuel cell stack may include a fuel passage path positioned adjacent to a first gas diffusion layer contacting one side of the membrane-electrode assembly, and an oxygen passage path positioned adjacent to a second gas diffusion layer contacting another side of the membrane-electrode assembly.

Each of the separators in the fuel cell stack may include a fuel passage path on one side thereof and an oxygen passage path on another side.

In the fuel cell stack, the electricity generating element may be stacked adjacent to another electricity generating element to form a stack structure, and a fourth insulating element may be positioned between one of the separators of the electricity generating element and an adjacent separator of the another electricity generating element to substantially insulate the one of the separators of the electricity generating element and the adjacent separator of the another electricity generating element.

The gas diffusion layer may include a sealing member to block the fuel and/or oxygen from diffusing out of the membrane-electrode assembly.

The sealing member may be formed corresponding to edges of the membrane-electrode assembly and is made of a polymer material and/or a rubber material.

### BRIEF DESCRIPTION OF THE DRAWINGS

FIG. 1 is an exploded perspective view partially illustrating a fuel cell stack according to a first embodiment of the present invention.

FIG. 2 is a schematic diagram showing a connection structure of the fuel cell stack of FIG. 1.

FIG. 3 is a plan schematic diagram illustrating a gas diffusion layer of FIG. 2.

FIG. 4 is a cross-sectional schematic diagram illustrating a fuel cell stack according to a second embodiment of the present invention.

FIG. 5 is a cross-sectional schematic diagram illustrating a fuel cell stack according to a third embodiment of the present invention.

FIG. 6 is a cross-sectional schematic diagram illustrating a fuel cell stack according to a fourth embodiment of the present invention.

FIG. 7 is a cross-sectional schematic diagram illustrating a fuel cell stack according to a fifth embodiment of the present invention.

FIG. 8 is plan schematic diagram illustrating a first gas diffusion layer of FIG. 7.

FIG. 9 is plan schematic diagram illustrating a second gas diffusion layer of FIG. 7.

FIG. 10 is a cross-sectional schematic diagram illustrating a fuel cell stack according to a sixth embodiment of the present invention.

FIG. 11 is a cross-sectional schematic diagram illustrating a fuel cell stack according to a seventh embodiment of the present invention.

FIG. 12 is a cross-sectional schematic diagram illustrating a fuel cell stack according to an eighth embodiment of the present invention.

FIG. 13 is a cross-sectional schematic diagram illustrating a fuel cell stack according to a ninth embodiment of the present invention.

FIG. 14 is a pre-assembly diagram of a conducting element illustrated in FIG. 13.

FIG. 15 is a cross-sectional schematic diagram illustrating a fuel cell stack according to a tenth embodiment of the present invention.

FIG. 16 is a cross-sectional schematic diagram illustrating a fuel cell stack according to an eleventh embodiment of the present invention.

FIG. 17 is a partially exploded perspective view illustrating the stack of FIG. 16.

FIG. 18 is a plan schematic diagram of a gas diffusion layer illustrated in FIG. 16.

FIG. 19 is a cross-sectional schematic diagram illustrating a fuel cell stack according to a twelfth embodiment of the present invention.

FIG. 20 is a cross-sectional schematic diagram illustrating a fuel cell stack according to a thirteenth embodiment of the present invention.

FIG. 21 is a cross-sectional schematic diagram illustrating a fuel cell stack according to a fourteenth embodiment of the present invention.

FIG. 22 is a schematic perspective view illustrating a structure of a conducting element of a fuel cell stack according to a fifteenth embodiment of the present invention.

### DETAILED DESCRIPTION

In the following detailed description, certain embodiments of the present invention are shown and described, by way of illustration. As those skilled in the art would recognize, the described embodiments may be modified in various ways, all without departing from the spirit or scope of the present invention. Accordingly, the drawings and description are to be regarded as illustrative in nature, rather than restrictive.

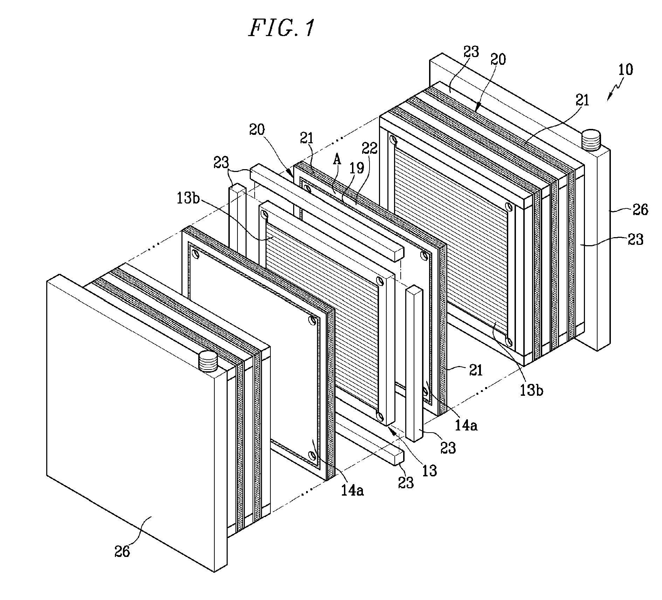

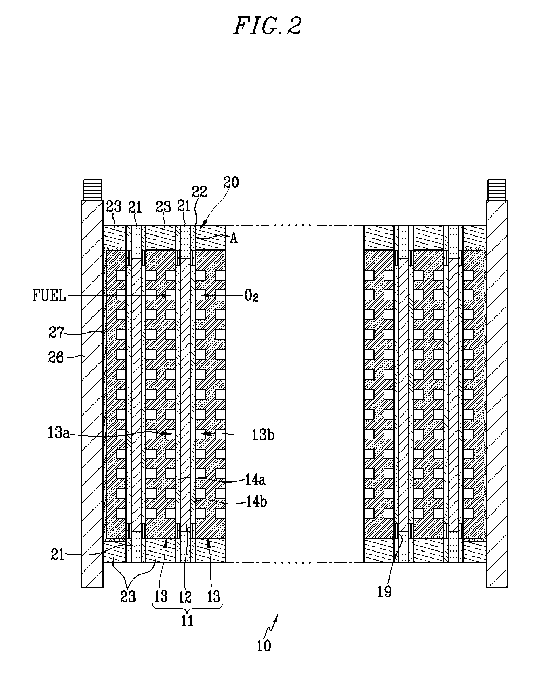

FIG. 1 is an exploded perspective view partially illustrating a fuel cell stack according to a first embodiment of the present invention, and FIG. 2 is a schematic diagram showing a connection structure of the fuel cell stack of FIG. 1.

Referring to FiGs. 1 and 2, the fuel cell stack 10 according to the first embodiment of the present invention includes an electricity generating element 11 of a unit cell which generates an electrical energy through oxidation of a fuel and reduction of oxygen.

In the above embodiment, a plurality of such electricity generating elements 11 are stacked adjacent to one another to form the stack 10.

The fuel cell stack 10 uses hydrogen contained in a liquid or gas fuel such as methanol, ethanol, liquid petroleum gas (LPG), liquefied natural gas (LNG), gasoline, or the like. The fuel cell stack 10 may adopt a direct oxidation fuel cell scheme where the electricity generating elements 11 generate electrical energy through oxidation of liquid or gas fuel and reduction of oxygen.

Alternatively, the fuel cell stack 10 may use, as a fuel, hydrogen generated from cracking of liquid or gas fuel in a general reformer. In this case, the fuel cell stack 10 adopts a polymer electrolyte membrane fuel cell scheme where the electricity generating elements 11 generate electrical energy through oxidation of hydrogen and reduction of oxygen.

The fuel cell stack 10 may use pure oxygen, stored in a separate supplier, or oxygen-containing air as a reaction gas at a cathode.

In the above fuel cell stack 10, each electricity generating element 11 includes two separators 13 positioned at both sides of a membrane-electrode assembly (MEA) 12.

An anode (not shown) is positioned at one side of the MEA 12 and a cathode (not shown) is positioned at another side of the MEA 12. Between the anode and the cathode, an electrolyte membrane (not shown) is positioned. At the anode, a fuel is oxidized to electrons and protons, the protons being transferred to the cathode through the electrolyte membrane. At the cathode, electrons transferred from an anode of an adjacent separator 13, the protons, and oxygen are reacted to produce water.

The two separators 13 are substantially adjacent to both sides of the MEA 12 and include a fuel passage path 13a, which enables fuel flow at one side of the MEA 12, and an oxygen passage path 13b, which enables oxygen flow at another side of the MEA 12. The fuel passage path 13a is composed of channels formed at one side of one of the two separators 13 and supplies fuel to the anode of the MEA 12. The oxygen passage path 13b is composed of channels formed at one side of another one of the two separators 13 and supplies oxygen to the cathode of the MEA 12. As shown in FiGs 1 and 2, the separators 13 of the stack 10, with the exception of the two outermost separators 13, have a both-sided flow structure where a fuel passage path 13a is formed at one side and a oxygen passage path 13b is formed at another side.

In the present embodiment, each separator 13 is made of at least one metal, for example, aluminum, copper, iron, nickel, cobalt, or alloys thereof, and is in a shape of a metal plate. The fuel passage path 13a and the oxygen passage path 13b of the separators 13 are fabricated by stamping or etching a metal plate. The metal plate may be processed using a press.

Alternatively, the separators 13 may be made with a low-conductive material having a lower conductivity than a carbon material, or a non-conducting material, using injection molding or extrusion molding. The low-conductive material can be a ceramic material, a polymer material, a synthetic resin material, and/or a rubber material.

In operation of the fuel cell stack 10, the separators 13 supply fuel to the anodes of the MEAs 12 through the fuel passage paths 13a and oxygen to the cathodes of the MEAs 12 through the oxygen passage paths 13b during operation. The fuel is converted to electrons and protons through an oxidation reaction of the fuel at the anodes. The protons are transferred to the cathodes through the electrolyte membranes, and the electrons are transferred to the cathodes through the separators 13, instead of through the electrolyte membranes. Movement of the electrons generates current, and the transferred electrons and protons are reacted with oxygen to reduce the oxygen, thereby generating heat and water.

In the present embodiment, the separators 13 of the fuel cell stack 10 are made of metal, and thus the separators 13 may be corroded by water, heat, and oxygen. Such corrosion of the separators 13 increases resistance, thereby limiting electron movement in the separators 13, and reduces conductivity of the separators 13. As a result, performance of the stack 10 is deteriorated.

Accordingly, each electricity generating element 11 of the fuel cell stack 10 of the present embodiment includes conducting elements 20 interposed between the separators 13 and the MEA 12. The conducting elements 20 enable electrons generated in the electricity generating elements 11 to transfer through the entire stack 10 (or to provide a current to a current receiving load).

In accordance with the present embodiment, each conducting element 20 includes one-layered gas diffusion layers (GDL) 14a and 14b interposed between the separators 13 of the electricity generating element 11 and the MEA 12. The gas diffusion layers 14a and 14b are disposed to oppose each other at both sides of the MEA 12. The gas diffusion layers 14a and 14b can be made of carbon composite, carbon paper, and/or carbon cloth. The gas diffusion layers 14a and 14b play a role of diffusing fuel and oxygen into both the anode and the cathode of the MEA 12.

The gas diffusion layers 14a and 14b also function as conductors for electrically connecting areas between the electricity generating elements 11. The edges of the gas diffusion layers 14a and 14b extend outside the edge of the separators 13.

The conducting elements 20 of the present embodiment enable the electrons generated in the MEAs 12 to be transferred by electrically connecting the electricity generating elements 11 of the stack 10 through terminal regions 22, which are regions extended from the gas diffusion layers 14a and 14b and extending outside the edges of the separators 13. The extended regions are illustrated as A in the drawings.

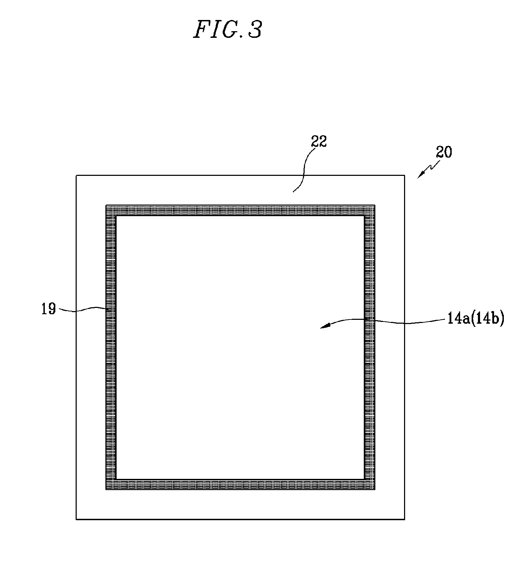

Herein, as shown in FIG. 3, each terminal region 22 is a region where the edges of the gas diffusion layers 14a and 14b extend outside the edges of the MEAs 12 and further extend outside the edges of the separators 13. In FIG. 3, the terminal regions 22 are exemplified to be a region extended from the gas diffusion layers 14a and 14b are extended outside of the four outer edges of the separator 13.

As illustrated in FIG. 3, each conducting element 20 includes a sealing member 19 at an edge portion contacting the edge of the MEA 12. The sealing member 19 blocks (or prevents) fuel and oxygen from diffusing to the terminal region 22, and leaking to the outside of the electricity generating element 11, when the fuel and oxygen diffuses through the gas diffusion layers 14a and 14b. The sealing member 19 also divides a region at the conducting element 20 contacting the MEA 12 and the terminal region 22 of the conducting element 20. The sealing member 19 is formed at a position of the gas diffusion layers 14a and 14b corresponding to the edges of the MEA 12 and is made of a polymer material; made of polytetrafluoroethylene (TEFLON), polyimide, or the like; and/or made of a rubber material.

The fuel cell stack 10 includes first insulating elements 21 which substantially insulate the conducting elements 20 in each electricity generating element 11.

The first insulating elements 21 may be formed between the terminal regions 22 of each electricity generating element 11. The terminal regions 22 positioned at the anodes of the MEAs 12 and the terminal regions 22 positioned at the cathodes of the MEAs 12 are electrically connected by connectors 23 to act as (+) and (-) terminals, having a predetermined potential difference, in each electricity generating element 11. The first insulating elements 21 insulate areas between the terminals to prevent a short thereof.

The first insulating elements 21 are formed in a shape of an insulating tape or insulating sheet and are composed of a synthetic polymer such as phenol resin, polyurethane, polyester resin, polyamide, acryl, urea/melamine resin, and/or silicone resin; and/or composed of a varnish-based material such as varnish.

The fuel cell stack 10 includes connectors 23, each of which electrically connects an area between a conducting element 20 positioned at one side of one of the electricity generating element 11 and a conducting element 20 positioned at one side of an adjacent one of the electricity generating elements 11.

The connectors 23 connect electricity generated in adjacent electricity generating elements 11 in series in the entire stack 10. Each connector 23 acts as a conductor, which electrically connects an area between a conducting element 20 positioned at one side of one of the electricity generating elements 11 and a conducting element 20 positioned at one side of an adjacent one of the electricity generating elements 11.

For this purpose, the connectors 23 are composed of a conductive carbon material and have a block shape, and are mounted between the terminal regions 22 of adjacent electricity generating elements 11.

Each connector 23 according to the present embodiment is positioned between the terminal region 22 at the anode of one electricity generating element 11 and the terminal region 22 at the cathode of an adjacent electricity generating element 11.

The fuel cell stack 10 of the present embodiment includes current collecting plates 26 for collecting electricity at the outermost ends of the stack 10. The current collecting plates 26 are insulated from the outermost separators 13 by second insulating elements 27 as illustrated in FIG. 2. Connectors 23 are mounted between the terminal regions 22 of the conducting elements 20 positioned at the outermost ends of the stack 10 and the current collecting plates 26. The current collecting plates 26 are positioned substantially adjacent to the outermost separators 13, and thus, are for positioning the plurality of electricity generating elements 11 in close contact with each other by applying a pressure. The current collecting plates 26 are fastened by a connection member (not shown), for example, a bolt and a nut, a rivet, or the like, to position the plurality of electricity generating elements 11 in close contact with each other by applying a pressure.

When the fuel cell stack 10 according to the first embodiment is operated, in each electricity generating element 11, fuel is supplied to the gas diffusion layer 14a positioned at one side of the MEA 12 through the fuel passage path 13a of a separator 13 and is then diffused to the anode of the MEA 12 through the gas diffusion layer 14a. Oxygen is supplied to the gas diffusion layer 14b, positioned at another side of the MEA 12, through the oxygen passage path 13b of another separator 13, and then diffused to the cathode of the MEA 12 through the gas diffusion layer 14b.

Thereby, at the anode of the MEA 12, the fuel is oxidized to generate electrons and protons. The protons are transferred to the cathode through the electrolyte membrane of the MEA 12 and the electrons are transferred to the cathode of an adjacent MEA 12 through gas diffusion layers 14a and 14b. Herein, current is generated by the movement of the electrons. At the cathode of the MEA 12, the electrons, the protons transferred from the anode, and the oxygen are reacted to reduce the oxygen and to generate heat and water.

To illustrate in further detail, the regions A, extended from the gas diffusion layers 14a and 14b, are insulated from each other to form terminal regions in each electricity generating element 11. The terminal regions in adjacent electricity generating elements 11 are connected in series by connectors 23. Therefore, the electrons are transferred by the connectors 23 from the gas diffusion layer 14a contacting the anode of one electricity generating element 11 to the diffusion layer 14b contacting the cathode of another electricity generating element 11.

Thus, each electricity generating element 11 generates a current through the movement of the electrons and applies an electrical energy having a predetermined potential difference to a load, that is, a portable electronic device such as a laptop PC, PDA, or the like, using the current collecting plates 26 positioned at the outermost ends of the stack 10.

The fuel cell stack 10 according to the present embodiment enables electrical coupling between the electricity generating elements 11 through the conducting elements 20, each acting as a conductor and a terminal, even if the metal forming the separators 13 of the electricity generating elements 11 may be corroded by heat, moisture, and oxygen, which limit the movement of electrons in the separators 13 and increase electrical resistance of the separators 13.

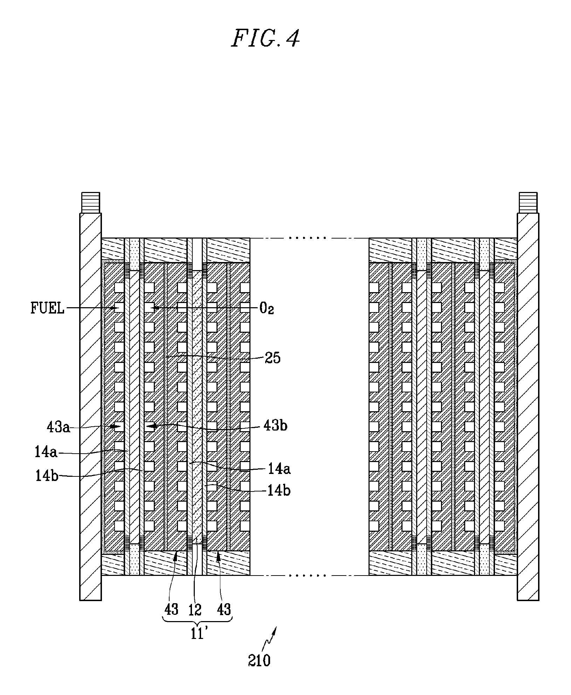

FIG. 4 is a cross-sectional schematic diagram illustrating a fuel cell stack according to a second embodiment of the present invention. In FIG. 4, the members in FIG. 4 with same function as the members in FIG. 2 are assigned the same reference numerals as in FIG. 2.

Referring to FIG. 4, the fuel cell stack 210, according to the second embodiment, includes separators 43 facing each other at both sides of the MEAs 12 and having single-sided flow structures, unlike the both-sided flow structure of the first embodiment. That is, in a single electricity generating element 11,a fuel passage path 43a is formed at one side of one separator 43, and an oxygen passage path 43b is formed at one side of an opposing separator 43..

More particularly, one of the two opposing separators 43 in a single electricity generating element 11' is positioned substantially adjacent to the gas diffusion layer 14a, which is positioned at one side of the MEA 12. The one of the two opposing separators 43 includes a fuel passage path 43a at one side thereof adjacent to the gas diffusion layer 14a and a flat surface at another side thereof. Another one of the two opposing separators 43 is positioned substantially adjacent to the gas diffusion layer 14b, which is positioned at another side of the MEA 12. The separators 43 include an oxygen passage path 43b at one side thereof adjacent to the gas diffusion layer 14b and a flat surface at another side thereof.

The flat surface of each separator 43 is stacked close to the flat surface of the separator 43 of an adjacent electricity generating element 11' so as to arrange the electricity generating elements 11' into the stack 210.

The fuel cell stack 210, according to the present embodiment, includes third insulating elements 25 for substantially insulating areas between adjacent electricity generating elements 11'. The third insulating elements 25 are interposed between separators 43 of adjacent electricity generating elements 11' and are formed of insulating tape or insulating sheet. The third insulating elements 25 are formed between the flat surfaces of the separators 43.

Since the separators 43 are made of metal, and thus the separators 43 may be oxidized and corroded by heat, moisture, and oxygen during electricity generation of the electricity generating elements 11', thereby increasing electrical resistance. Because of this, the electrons generated in each electricity generating element 11' may not be entirely directed to the gas diffusion layers 14a and 14b, and may instead be partially (and undesirably) directed to the separators 43 of adjacent electricity generating elements 11' through the separators 43. However, the third insulating elements 25 block such undesired movement of the electrons. The third insulating elements 25 are composed of a synthetic polymer such as phenol resin, polyurethane, polyester resin, polyamide, acryl, urea/melamine resin, and/or silicone resin; and/or a varnish-based material such as varnish.

Other elements of the stack 210 according to the present embodiment are substantially the same as those of the first embodiment, and thus a detailed description of these other elements is omitted.

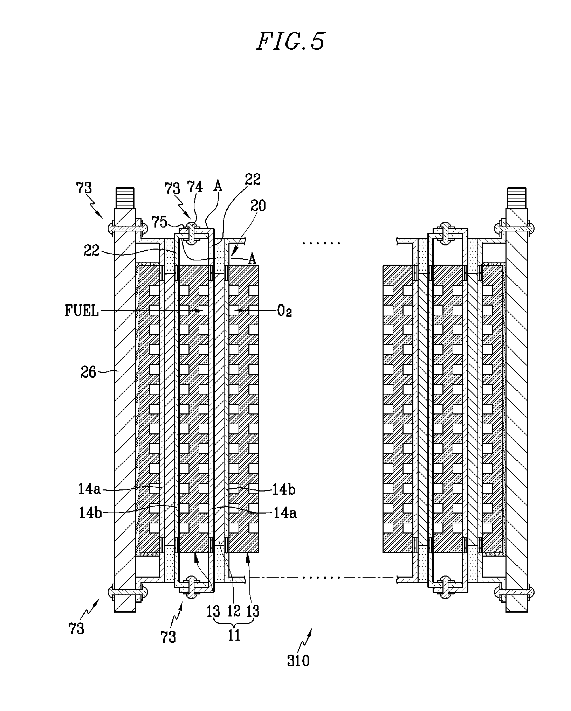

FIG. 5 is a cross-sectional schematic diagram illustrating a fuel cell stack according to a third embodiment of the present invention. In FIG. 5, the members in FIG. 5 with the same function as the members in FIG. 2 are assigned the same reference numerals as in FIG. 2.

Referring to FIG. 5, the fuel cell stack 310 according to the present embodiment has substantially the same structure as the first embodiment, except that connectors 73 are used in FIG. 5. The connectors 73 include rivets 74 and electrically connect areas between conducting elements 20 of adjacent electricity generating elements 11.

In the fuel cell stack 310 according to the present embodiment, the terminal regions 22, that is, the regions A extended from the gas diffusion layers 14a and 14b of adjacent electricity generating elements 11, are overlapped with each other. The rivets 74 are fastened to the overlapped terminal regions 22 to electrically couple the terminal regions 22. The connectors 73 also include washers 75, mounted between the terminal regions 22 and the rivets 74, to improve or spread a connection force between the terminal regions 22 and the rivets 74. The rivets 74 and the washers 75 are made of a conductive metal, for example, aluminum, copper, iron, nickel, or the like; or alloys thereof.

The terminal regions 22 of the conducting elements 20 positioned at the outermost ends of the stack 310 are fixed to the current collecting plates 26 through connectors 73.

Other elements of the stack 310 according to the present embodiment are substantially the same as those of the first embodiment, and thus a detailed description of these other elements is omitted.

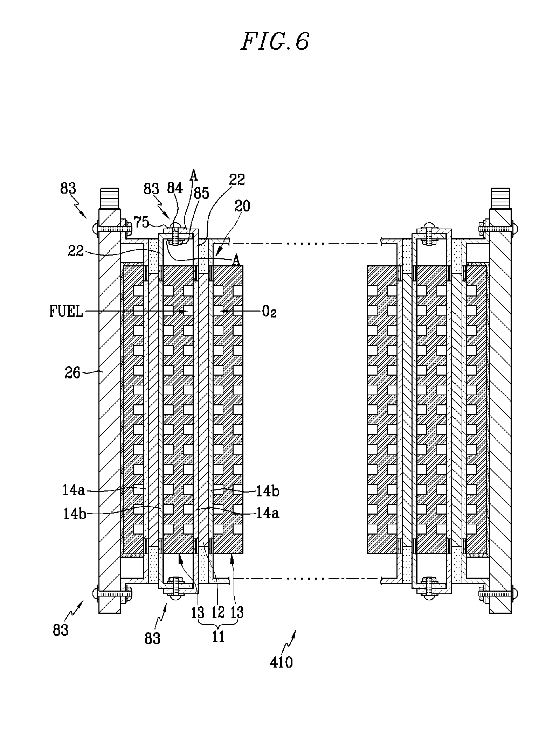

FIG. 6 is a cross-sectional schematic diagram illustrating a fuel cell stack according to a fourth embodiment of the present invention. In FIG. 6, the members in FIG. 6 with the same function as the members in FIG. 2 are assigned the same reference numerals as in FIG. 2.

Referring to FIG. 6, the fuel cell stack 410 according to the present embodiment has the substantially the same structure as the first embodiment, except that connectors 83 are used in FIG. 6. The connectors 83 include bolts 84 and nuts 85 and electrically connect areas between conducting elements 20 of adjacent electricity generating elements 11.

In the fuel cell stack 410 according to the present embodiment, the terminal regions 22, that is, the regions A extended from the gas diffusion layers 14a and 14b of adjacent electricity generating elements 11, are overlapped with each other. The bolts 84 and nuts 85 are fastened to the overlapped terminal regions 22 to electrically couple the terminal regions 22. The connectors 83 also include washers 75, mounted between the terminal regions 22 and the bolts 84 and nuts 85, to improve (or spread) a connection force between the terminal regions 22 and the bolts 84 and nuts 85. The bolts 84 and nuts 85 and the washers 75 are made of a conductive metal, for example, aluminum, copper, iron, nickel, or the like; or alloys thereof.

The terminal regions 22 of the conducting elements 20 positioned at the outermost ends of the stack 410 are fixed to the current collecting plates 26 through the connectors 83.

Other elements of the stack 410 according to the present embodiment are substantially the same as those of the first embodiment, and thus a detailed description of these other elements is omitted.

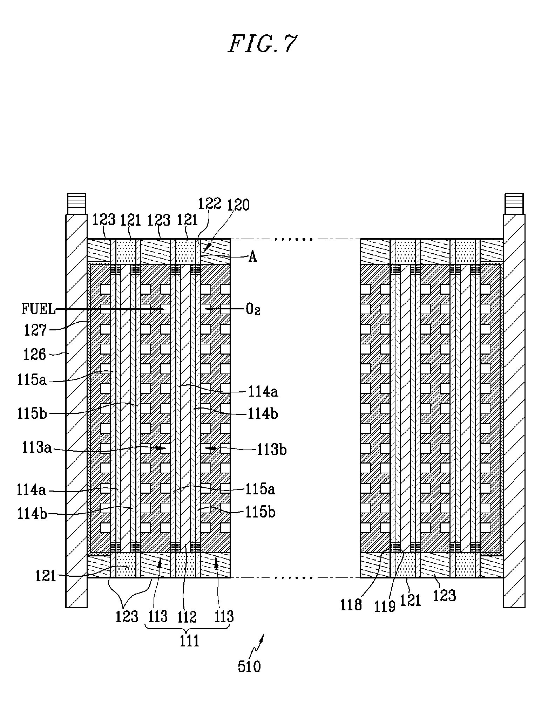

FIG. 7 is a cross-sectional schematic diagram illustrating a fuel cell stack according to a fifth embodiment of the present invention.

Referring to FIG. 7, as in the first embodiment, the fuel cell stack 510 according to the fifth embodiment includes conducting elements 120 between separators 113 and MEAs 112 of electricity generating elements 111. The conducting elements 120 include multi-layered gas diffusion layers 114a, 115a, 114b, and 115b positioned facing each other at both sides of the MEAs 112.

In FIG. 7, the conducting elements 120 are shown to be double-layered gas diffusion layers 114a, 115a, 114b, and 115b positioned between the separators 113 and the MEAs 112. However, the present invention is not limited to the illustrated layers.

More particularly, the conducting elements 120 include first diffusion layers 114a and 114b substantially adjacent to both sides of the MEAs 112, and second diffusion layers 115a and 115b substantially adjacent to the first gas diffusion layers 114a and 114b and contacting respective separators 113. The conducting elements 120 are for electrical coupling areas between the electricity generating elements 111 in the entire stack 510, and also are for diffusing fuel and oxygen to both the anodes and the cathodes of the MEAs 112.

Herein, the first gas diffusion layers 114a and 114b, and the second gas diffusion layers 115a and 115b are made of carbon composite, carbon paper, and/or carbon cloth. As shown in FIG. 7, each separator 113 of the stack 510, except the two outermost separators 113, has a both-sided flow structure where a fuel passage path 113a is formed at one side and an oxygen passage path 113b at another side.

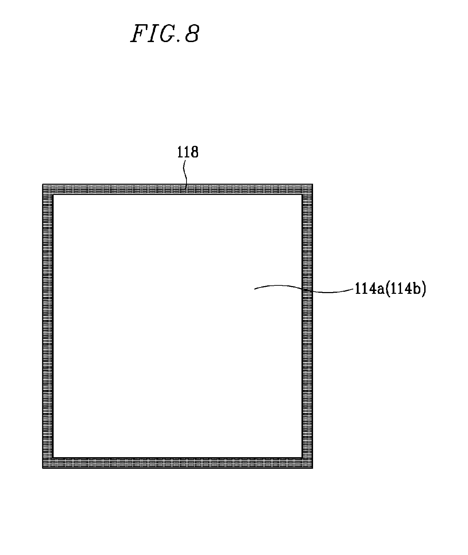

Each of the first gas diffusion layers 114a and 114b of the conducting elements 120 of the present embodiment have a size corresponding to the sizes of the MEAs 112 and separators 113. Referring also to FIG. 8, the first gas diffusion layers 114a and 114b include first sealing members 118 at the edges thereof to prevent diffusion of the fuel and oxygen to outside of the MEAs 112, as illustrated in FIG. 8. The first sealing members 118 block fuel and oxygen from diffusing to outside of the MEAs 112, and also from leaking to outside of the electricity generating elements 111, when fuel supplied through the fuel passage paths 113a of the separators 113 and oxygen supplied through the oxygen passage paths 113b of the separators 113 are diffused into the first gas diffusion layers 114a and 114b. The first sealing members 118 are formed at an edge portion contacting the edges of the MEAs 112, that is, are formed at edges of the gas diffusion layers 114a and 114b. The first sealing members 118 are made of a polymer material; made of polytetrafluoroethylene (TEFLON), polyimide, or the like; and/or made of a rubber material.

In the conducting elements 120 of the present embodiment, extended regions of the second gas diffusion layers 115a and 115b function as terminals for electrically connecting the first gas diffusion layers 114a and 114b between adjacent electricity generating elements 111. For this purpose, the second gas diffusion layers 115a and 115b are positioned between the separators 113 and the first gas diffusion layers 114a and 114b, and are attached to the first gas diffusion layers 114a and 114b.

The edges of the second gas diffusion layers 115a and 115b are extended outside the edge of the first gas diffusion layers 114a and 114b and also outside the edge of the separators 113, as shown by A in FIG. 7.

The regions A extended from the second gas diffusion layers 115a and 115b are terminal regions 122 that electrically connect areas between the electricity generating elements 111 of the stack 510 to enable electrical connection of each electricity generating element 111.

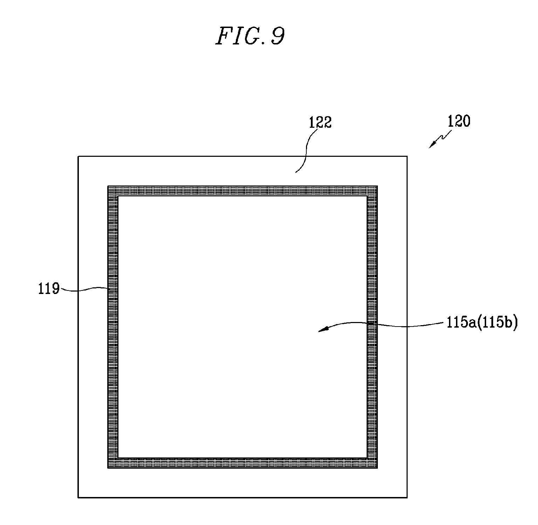

As shown in FIG. 9, the terminal regions 122 are regions extended from the edges of the second gas diffusion layers 115a and 115b, and are outside of at least one edge of MEA 112 and the edges of the first gas diffusion layers 114a and 114b and separators 113. In FIG. 9, the terminal regions 122 are illustrated as extending outside the four edges of the second gas diffusion layers 115a and 115b. However, the present invention is not thereby limited. For example, the terminal regions 122 may only extend outside one, two, or three of the edges of the second gas diffusion layers 115a and 115b.

The conducting elements 120 include second sealing members 119 at a position contacting the edges of the second gas diffusion layers 115a and 115b, as illustrated in FIG. 9. The second sealing members 119 block fuel and oxygen from diffusing into the terminal regions 122, and also from leaking to outside of the electricity generating elements 111, when fuel supplied through the fuel passage paths 113a of the separators 113 and oxygen supplied through the oxygen passage paths 113b of the separators 113 are diffused into the second gas diffusion layers 115a and 115b. The second sealing members 119 divide regions corresponding to the second gas diffusion layers 115a and 115b and the terminal regions 122 in the entire regions of the conducting elements 120. The second sealing members 119 are formed at an edge portion contacting the edges of the second gas diffusion layers 115a and 115b. The second sealing members 119 are made of a polymer material; made of polytetrafluoroethylene (TEFLON), polyimide, or the like; and/or made of a rubber material.

The fuel cell stack 510 of the present embodiment includes first insulating elements 121 which substantially insulate the conducting elements 120 in each electricity generating element 111. The first insulating elements 121 may be interposed between the terminal regions 122 in each electricity generating element 111. Other elements of the first insulating elements 121 are substantially the same as those of the first embodiment and thus a detailed description of these other elements is omitted.

Furthermore, the fuel cell stack 510 of the present embodiment includes connectors 123 that electrically connect areas between conducting elements 120 of adjacent electricity generating elements 111.

The connectors 123 connect electricity generated in adjacent electricity generating elements 111 of the entire stack in series. Each of the connectors 123 electrically connect an area between a conducting element 120 positioned at one side of one of the electricity generating elements 111 and a conducting element 120 positioned at one side of an adjacent one of the electricity generating elements 111.

For this purpose, the connectors 123 are composed of a conductive carbon material and have a block shape, and are mounted between the terminal regions 122 of adjacent electricity generating elements 111. Other elements of the connectors 123 are substantially the same as those of the first embodiment and thus a detailed description of these other elements is omitted.

The fuel cell stack 510 of the present embodiment includes current collecting plates 126 for collecting electricity at the outermost ends of the stack 510. The current collecting plates 126 can position a plurality of electricity generating elements 111 in close contact with each other by applying a pressure through a fastening (or connection) member. The current collecting plates 126 are insulated from the outermost separators 113 by second insulating elements 127, as illustrated in FIG. 7. Connectors 123 are mounted between the conducting elements 120 positioned at the outermost ends of the stack 110 and the current collecting plates 126, that is, between the terminal regions 122 and the current collecting plates 126.

When the fuel cell stack 510 according to the present embodiment is operated, fuel is supplied to the first and second gas diffusion layers 114a and 115a positioned at one side of the MEAs 112 through the fuel passage paths 113a of the separators 113 and is then diffused to the anodes of the MEAs 112 through the first and second gas diffusion layers 114a and 115a. Also, oxygen is supplied to the first and second gas diffusion layers 114b and 115b positioned at another side of the MEAs 112 through the oxygen passage paths 113b of the separators 113, and then diffused into the cathodes of the MEAs 112 through the first and second gas diffusion layers 114b and 115b.

Thereby, each electricity generating element 111 of the stack 510 generates electrical energy through oxidation of fuel and reduction of oxygen, in a manner that is substantially the same as the manner described for the first embodiment. The regions A extended form the second gas diffusion layers 115a and 115b are terminal regions 122, insulated from each other in each electricity generating element 111, and the terminal regions 122 are connected by the connectors 123 to the adjacent electricity generating elements 111 in series. Through the connectors 123, electrons generated in the MEAs 112 are transferred from the second gas diffusion layer 115a positioned at an anode of one electricity generating element 111 to the second gas diffusion layer 115b positioned at a cathode of an adjacent electricity generating element 111.

Thus each electricity generating element 111 generates current through movement of the electrons and applies electrical energy having a predetermined potential difference to a load, that is, a portable electronic device such as a laptop PC, PDA, or the like, using the current collecting plates 126 positioned at the outermost ends of the stack 110.

The fuel cell stack 110 according to the present embodiment enables the movement of electrons through the first gas diffusion layers 114a and 114b, and the second gas diffusion layers 115a and 115b, even if the metal forming the separators 113 of the electricity generating elements 111 may be corroded by heat, moisture, and oxygen, which limit the movement of electrons in the separators 113 and increase electrical resistance of the separators 113.

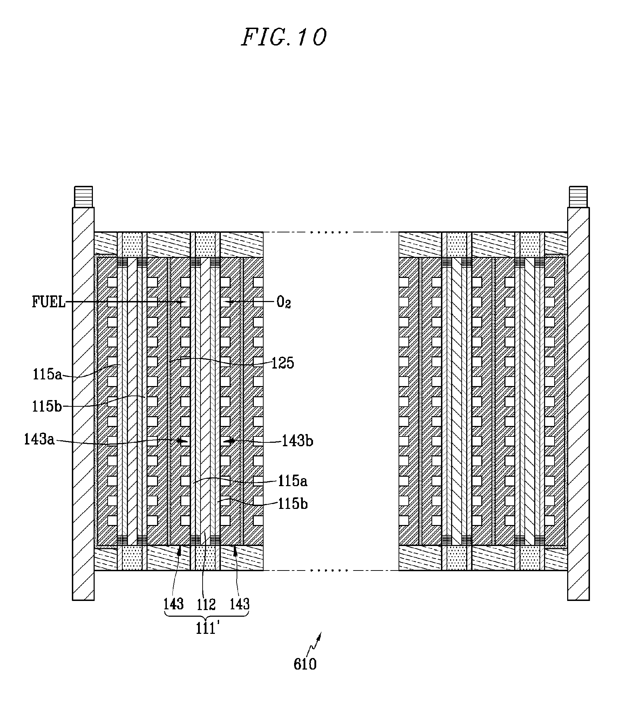

FIG. 10 is a cross-sectional schematic diagram illustrating a fuel cell stack according to a sixth embodiment of the present invention. In FIG. 10, the members in FIG. 10 with the same function as the members in FIG. 7 are assigned with the same reference numerals as in FIG. 7.

Referring to FIG. 10, the fuel cell stack 610, according to the sixth embodiment, includes separators 143 facing each other at both sides of the MEAs 112 and having single-sided flow structures, unlike the both-sided structure of the fifth embodiment. That is, in a single electricity generating element 111', a fuel passage path 143a is formed at one side of one separator 143, and an oxygen passage path 143b is formed at one side of an opposing separator 143.

More particularly, one of the two opposing separators 143 in a single electricity generating element 111' is positioned substantially adjacent to the second gas diffusion layer 115a, which is positioned at one side of the MEA 112. The one of the two opposing separators 143 includes a fuel passage path 143a at one side thereof adjacent to the second gas diffusion layer 115a and a flat surface at another side. The other separator 143 is positioned closely adjacent to the second gas diffusion layer 115b, which is positioned at the other side of the MEA 112. The separator 143 includes an oxygen passage path 143b at one side adjacent to the second gas diffusion layer 115b and a flat surface at the other side.

The flat surface of each separator 143 is stacked close to the flat surface of the separator 143 of an adjacent electricity generating element 111' so as to arrange the electricity generating elements 111' into the stack 610.

The fuel cell stack 610 according to the present embodiment includes third insulating elements 125 for substantially insulating areas between adjacent electricity generating elements 111'. The third insulating elements 125 are interposed between separators 143 of adjacent electricity generating elements 111' and are formed of insulating tape or insulating sheet.

Since the separators 143 are made of metal, and thus the separators 143 may be corroded by heat, moisture, and oxygen during electricity generation of the electricity generating elements 111' thereby increasing electrical resistance. Because of this, the electrons generated in each electricity generating element 111' may not be entirely directed to the second gas diffusion layers 115a and 115b and may instead be partially (and undesirably) directed to the separators 143 of adjacent electricity generating elements 111 through the separators 143. However, the third insulating elements 125 block this undesired movement of the electrons.

The third insulating elements 125 are composed of a synthetic polymer such as phenol resin, polyurethane, polyester resin, polyamide, acryl, urea/melamine resin, and/or silicone resin; and/or a varnish-based material such as varnish.

Other elements of the stack 610 according to the present embodiment are substantially the same as those of the fifth embodiment, and thus a detailed description of the other elements is omitted.

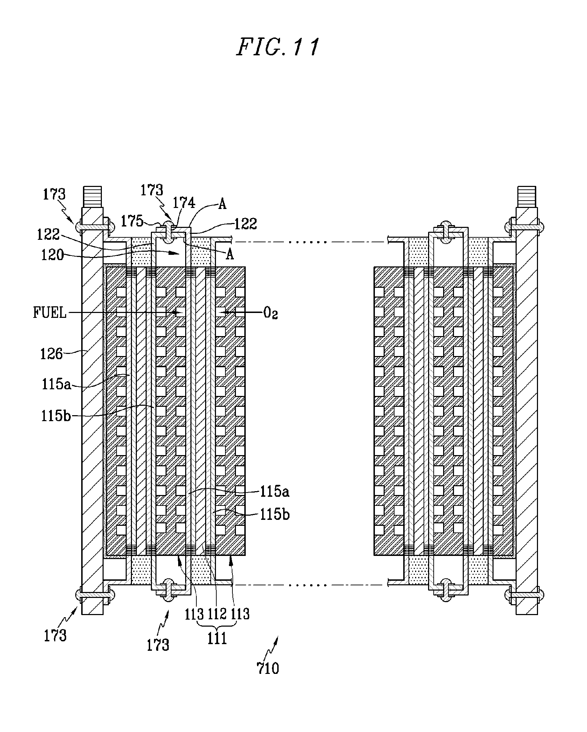

FIG. 11 is a cross-sectional schematic diagram illustrating a fuel cell stack according to a seventh embodiment of the present invention. In FIG. 11, the members in FIG. 11 with the same function as the members in FIG. 7 are assigned the same reference numerals as in FIG. 7.

Referring to FIG. 11, the fuel cell stack 710 according to the present embodiment has substantially the same structure as the fifth embodiment, except that connectors 173 are used in FIG. 11. The connectors 73 include rivets 174 and electrically connect areas between the conducting elements 120 of adjacent electricity generating elements 111.

In the fuel cell stack 710 according to the present embodiment, the terminal regions 122, which are the regions A extended from the second gas diffusion layers 115a and 115b of adjacent electricity generating elements 111, are overlapped with each other. The rivets 174 are fastened to the overlapped terminal regions 122 to electrically couple the terminal regions. The connectors 173 also include washers 175, mounted between the terminal regions 122 and the rivets 174, to improve (or spread) a connection force between the terminal regions 122 and the rivets 174.

The rivets 174 and the washers 175 are made of a conductive metal, for example, aluminum, copper, iron, nickel, or the like; or alloys thereof. The terminal regions 122 of conducting elements 120 positioned at the outermost ends of the stack 710 are fixed to the current collecting plates 126 through the connectors 173.

Other elements of the stack 710 according to the present embodiment are substantially the same as those of the fifth embodiment, and thus a detailed description of these other elements is omitted.

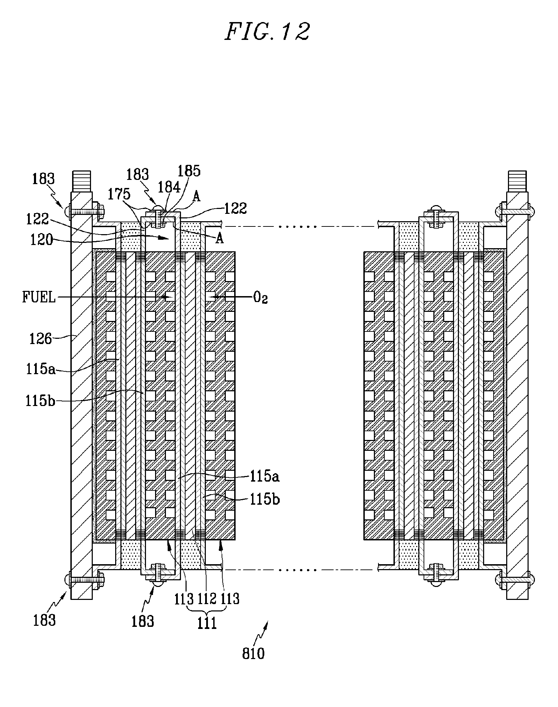

FIG. 12 is a cross-sectional schematic diagram illustrating a fuel cell stack according to an eighth embodiment of the present invention. In FIG. 12, the members in FIG. 12 with the same function as the members in FIG. 7 are assigned the same reference numerals as in FIG. 7.

Referring to FIG. 12, the fuel cell stack 810 according to the present embodiment has substantially the same structure as the fifth embodiment, except that connectors 183 are used in FIG. 12. The connectors 183 include bolts 184 and nuts 185 and electrically connect areas between the conducting elements 120 of adjacent electricity generating elements 111.

In the fuel cell stack 810 according to the present embodiment, the terminal regions 122, which are the regions A extended from the second gas diffusion layers 115a and 115b, of adjacent electricity generating elements 111 are overlapped with each other. The bolts 184 and nuts 185 are fastened to the overlapped terminal regions 122 to electrically couple the terminal regions 122. The connectors 183 also include washers 175, mounted between the terminal regions 122 and the bolts 184 and nuts 185, to improve (or spread) a connection force between the terminal regions 122 and the bolts 184 and nuts 185.

The bolts 184 and nuts 185 and washers 175 are made of a conductive metal, for example, aluminum, copper, iron, nickel, or the like; or alloys thereof. The terminal regions 122 of conducting elements 120 positioned at the outermost ends of the stack 810 are fixed to the current collecting plates 126 through the connectors 183.

Other elements of the stack 810 according to the present embodiment are substantially the same as those of the fifth embodiment, and a fully detailed description of these other elements is omitted.

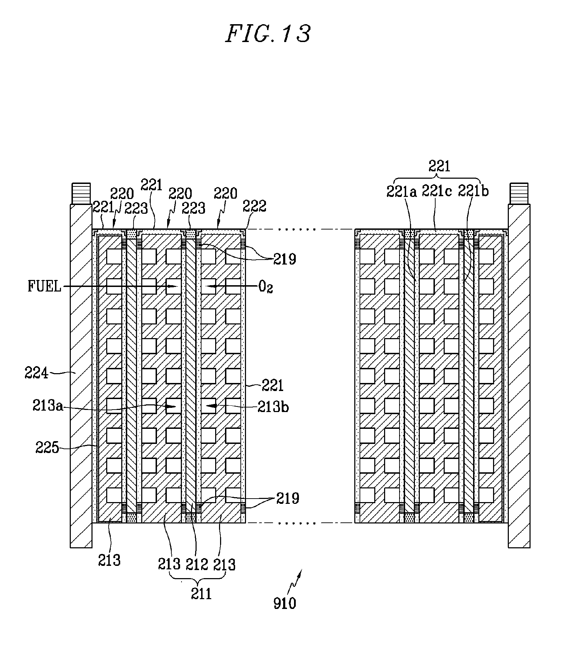

FIG. 13 is a cross-sectional schematic diagram illustrating a fuel cell stack according to a ninth embodiment of the present invention.

Referring to FIG. 13, the fuel cell stack 910 according to the ninth embodiment includes conducting elements 220 substantially surrounding the separators 213 of the electricity generating elements 211 and thereby enabling electrons generated in the MEAs 212 to transfer.

As shown in FIG. 13, each separator 213 is positioned substantially adjacent to an MEA 212. The separators 213 of the stack 910, except the two outermost separators 213, have a both-sided flow structure where a fuel passage path 213a is formed at one side and an oxygen passage path 213b is formed at another side.

According to the present embodiment, conducting elements 220 are interposed between each separator 213 and each MEA 212, and include integrally connected portions which are substantially adjacent to each separator 213, and the conducting elements 220 substantially surround at least one entire edge of each separator 213.

The conducting elements 220 enable electrical connection between adjacent electricity generating elements 211 through the gas diffusion layers 221. The conducting elements 220 enable smooth movement of electrons generated in the MEAs 212 to adjacent electricity generating elements 211 through the above electrical connection of gas diffusion layers 221. The conducting elements 220 are interposed between each separator 213 and each MEA 212 to act as gas diffusion layers for diffusing fuel and oxygen to the anode and the cathode respectively at the two sides of the MEAs 212.

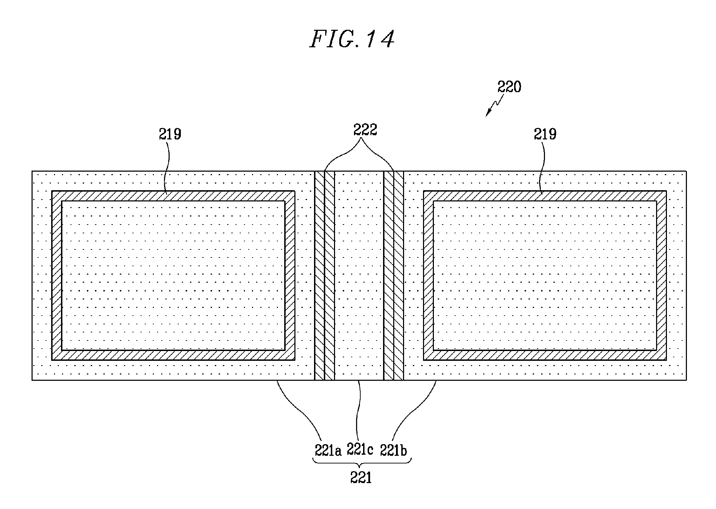

FIG. 14 is a pre-assembly (planar sheet) diagram of the conducting elements 220 illustrated in FIG. 13. The conducting element 220 has an integrally connected structure, where one portion is substantially adjacent to one side of a corresponding separator 213 and another portion is substantially adjacent to another side of the separator 213. The conducting element 220 also has a portion that surrounds at least one edge of the separator 213.

More particularly, the conducting element 220 includes a first portion 221a substantially adjacent to one side of the separator 213, a second portion 221b substantially adjacent to another side of the separator 213, and a third portion 221 c integrally connecting the first portion 221a and the second portion 221b and being positioned at one side edge of the separator 213.

Herein, the first portion 221a is positioned between the corresponding separator 213 and a corresponding MEA 212 and the second portion 221b is positioned between the corresponding separator 213 and another corresponding MEA 212. Each of the first portion 221a and the second portion 221b functions as a conductor and a terminal to enable electrical connection between the electricity generating elements 220. The third portion 221c is positioned at the edge of the corresponding separator 213 and functions as a connector for connecting the first portion 221 a and the second portion 221 b.

The above conducting element 220 has a "⊏" shape where a sheet with a predetermined width and length is divided into the first portion 221a, the second portion 221 b, and, in the center, the third portion 221 c, and the first and second portions 221 a and 221b are folded in a direction vertical (or perpendicular) to the third portion 221c. The conducting element 220 is made of a material such as carbon composite, carbon paper, and/or carbon cloth' and/or any other suitable materials that can be used for making a gas diffusion layer.

The first portion 221a and the second portion 221 b of the conducting element 220 may include a sealing member 219 at a position corresponding to the edges of a MEA 212. The sealing member 219 blocks the fuel and oxygen from diffusing outside of the MEA 212, and thus leaking outside the electricity generating element 211 and diffusing into the third portion 221c, when the fuel supplied to the first portion 221a through the fuel passage path 213a of the separator 213 and oxygen supplied to the second portion 221 b through the oxygen passage path 213b of the separator 213 are diffused through the first and second portions 221a and 221 b. Furthermore, the sealing member 219 divides regions corresponding to the MEA 212 from the entire first and second portions 221a and 221b. The sealing member 219 is formed in the first and second portions 221a and 221b corresponding to the edges of the MEA 212. It is made of a polymer material; made of polytetrafluoroethylene (TEFLON), polyimide, or the like; and/or made of a rubber material.

The conducting element 220 according to the present embodiment includes bending members 222, which are formed at the connections between the first portion 221a and the third portion 221c, and between the second portion 221b and the third portion 221c to make the first portion 221a and the second portion 221b bend. The bending member 222 is made of a polymer material, a rubber material, and/or a metal.

The fuel cell stack 210 may include first insulating elements 223 that substantially insulate adjacent conducting elements 220 in each electricity generating element 211. The first insulating elements 223 are positioned between the third portions 221c of the conducting elements 220 in each electricity generating element 211. The conducting element 220 surrounding a separator 213 at one side of the MEA 212 and the conducting element 220 surrounding the separator 213 at another side of the MEA 212 act as (+) and (-) terminals having a predetermined potential difference, in a single electricity generating element 211. The first insulating elements 223 insulate between the terminals to prevent a short thereof.

Each first insulating element 223 is formed in a shape of an insulating tape or insulating sheet and is composed of a synthetic polymer such as phenol resin, polyurethane, polyester resin, polyamide, acryl, urea/melamine resin, and/or silicone resin, and/or composed of a varnish-based material such as varnish.

The fuel cell stack 210 according to the present embodiment may include current collecting plates 224 at the outermost ends of the stack 910 for collecting electricity generated in the MEAs 212. The current collecting plates 224 position a plurality of electricity generating elements 211 in close contact with each other by applying a pressure through a connection member (not shown).

The fuel cell stack 910 also includes second insulating elements 225 which are positioned between outermost parts of the outermost conducting elements 220 and the separators 213, and thus substantially insulates the outermost parts of the outermost conducting elements 220 and the separators 213.

Since the separators 213 are made of metal and may be oxidized and corroded by heat, moisture, and oxygen during electricity generation of the electricity generating elements 211, thereby increasing electrical resistance, the second insulating elements 225 block the current collected by the current collecting plates 224 through the outermost conducting elements 220 from being applied to the separators 213.

When the fuel cell stack 910 according to the present embodiment is operated, fuel is supplied to the first portion 221a of the conducting element 220 through the fuel passage path 213a of the separator 213 in each electricity generating element 211, and then diffused to the anode of the MEA 212 through the first portion 221a. Oxygen is supplied to the second portion 221 b of the conducting element 220 through the oxygen passage path 213b of the separator 213 in each electricity generating element 211, and then diffused to the cathode of the MEA 212 through the second portion 221 b.

The fuel is converted to electrons and protons through oxidation reaction of the fuel at the anode of each MEA 212. The protons are transferred to the cathodes through the electrolyte membranes of the MEAs 212 and the electrons are transferred to the cathodes of adjacent MEAs 212 through the conducting elements 220, that is, through the gas diffusion layers 221. Herein, movement of the electrons generates current. At the cathodes of the MEAs 212, the transferred electrons and protons are reacted with oxygen to reduce the oxygen and to generate heat and water.

To illustrate in further detail, the conducting elements 220, being composed of the gas diffusion layer, are insulated from each other in each electricity generating element 211, and surround the separators 213. Adjacent electricity generating elements 211 are connected by the conducting elements 220 in series. Therefore, the electrons generated in the electricity generating elements 211 are transferred through the conducting elements 220. Thus the stack 910 generates current through movement of the electrons and applies electrical energy having a predetermined potential difference to a load, that is, a portable electronic device such as a laptop PC, PDA, or the like, using the current collecting plates 224 positioned at the outermost ends of the stack 910. The fuel cell stack 910, according to the present embodiment, enables the movement of electrons through the conducting elements 220 surrounding the separators 213 in each electricity generating element 211 and functioning as conductors and terminals to electrically connect all of the electricity generating elements 211, even if metal forming the separators 213 of the electricity generating elements 211 may be corroded by heat, moisture, and oxygen, which limit the movement of electrons in the separators 213 and increase electrical resistance.

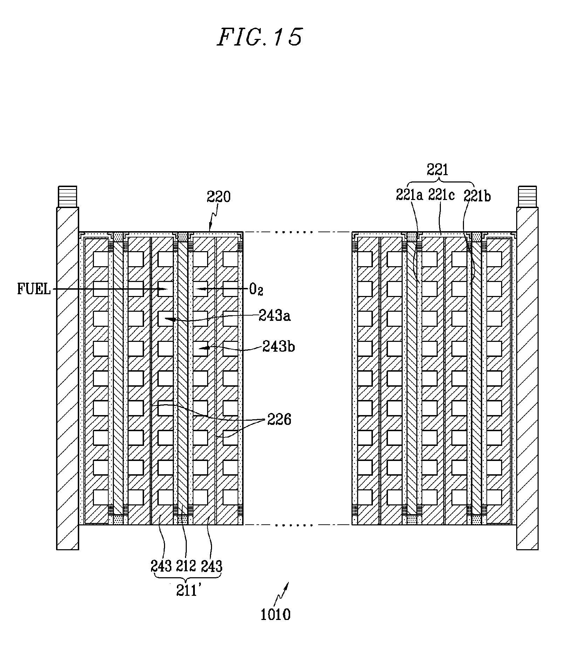

FIG. 15 is a cross-sectional schematic diagram illustrating a fuel cell stack according to a tenth embodiment of the present invention. In FIG. 15, the members in FIG. 15 with the same function as the members in FIG. 13 are assigned with the same reference numerals as in FIG. 13.

Referring to FIG. 15, the fuel cell stack 1010, according to the tenth embodiment, includes separators 243 facing each other at both sides of each MEA 212 and having single-sided flow structures, unlike the both-sided structure of the ninth embodiment. In a single electricity generating element 211, a fuel passage path 243a is formed at one side of the separator 243 and an oxygen passage path 243b is formed at one side of the opposing separator 243

More particularly, one of the two opposing separators 243 in a single electricity generating element 211 is positioned substantially adjacent to the second portion 221 b of the conducting element 220. The one of the two opposing separators 243 includes a fuel passage path 243a at one side thereof adjacent to the conducting element 220 and a flat surface at another side thereof. Another one of the two opposing separators 243 is positioned substantially adjacent to the first portion 221 a of the conducting element 220. The another one of the two opposing separators 243 includes an oxygen passage path 243b at one side thereof adjacent to the first portion 221a and a flat surface at another side thereof. The electricity generating elements 211 are stacked one after another to form the stack 1010 so that the flat surface of each separator 243 may be stacked close to the flat surface of the separator 243 of an adjacent electricity generating element 211. In addition, the conducting elements 220 may substantially surround the entire outermost separators 243.

The fuel cell stack 1010 according to the present embodiment includes third insulating elements 226 for substantially insulating areas between adjacent electricity generating elements 211'. The third insulating elements 226 are interposed between separators 243 of adjacent electricity generating elements 211' and are formed of insulating tape or insulating sheet. The third insulating elements 226 are interposed between the flat surfaces of the separators 243 closely adjacent to the conducting elements 220.

Since the separators 243 are made of metal, and thus the separators 243 may be corroded by heat, moisture, and oxygen during electricity generation of the electricity generating elements 211', thereby increasing electrical resistance. Because of this, the electrons generated in each electricity generating element 211' may not be entirely directed to the conducting elements 220 and may instead be partially (and undesirably) directed to the separators 243 of adjacent electricity generating elements 211 through the separators 243. However, the third insulating elements 226 block such undesired movement of the electrons. The third insulating elements 226 are composed of a synthetic polymer such as phenol resin, polyurethane, polyester resin, polyamide, acryl, urea/melamine resin, and/or silicone resin; and/or a varnish-based material such as varnish.

Other elements of the stack 1010 according to the present embodiment are substantially the same as those of the ninth embodiment, and thus a detailed description of these other elements is omitted.

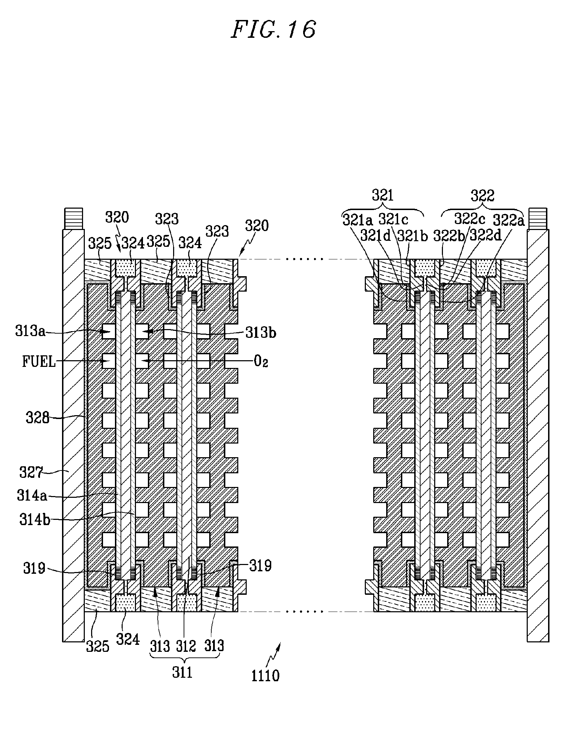

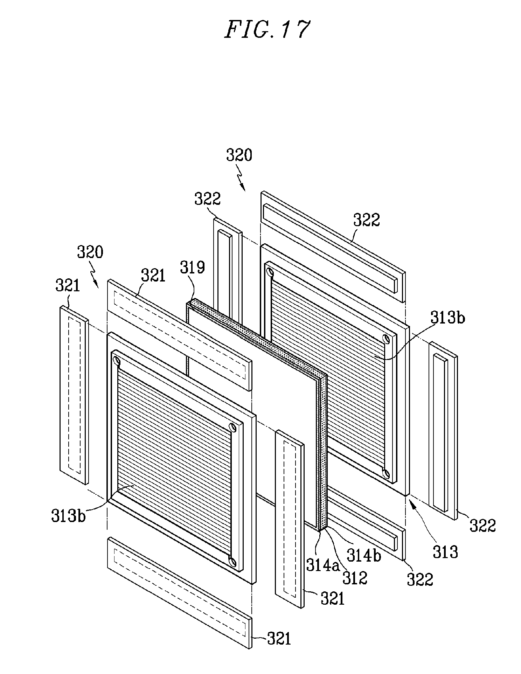

FIG. 16 is a cross-sectional schematic diagram of a fuel cell stack according to an eleventh embodiment of the present invention and FIG. 17 is a partially exploded perspective view of the stack illustrated in FIG. 16.

Referring to FIGS. 16 and 17, the fuel cell stack 1110 according to the eleventh embodiment includes an electricity generating element 311 of a unit cell (or a cell unit)including an MEA 312 and two separators 313 positioned at both sides of the MEA 312. The fuel cell stack of the present embodiment may include a plurality of electricity generating elements 311 that are stacked adjacent to one another to form the stack1110.

As shown in FIGS. 16 and 17, each separator 313 of the stack1110, except the two outermost separators 313, has a both-sided flow structure where a fuel passage path 313a is formed on one side and an oxygen passage path 313b on the other side.

The stack 310 includes the gas diffusion layers 314a and 314b between each separator 313 and each MEA 312 for diffusing fuel and oxygen respectively into anodes and cathodes of the MEAs 312, and for enabling electrons generated at the anodes of the MEAs 312 to transfer through the separators 313 to the cathode of an MEA 312 of an adjacent electricity generating element 311. The gas diffusion layers 314a and 314b are positioned facing each other at both sides of the MEA 312 and have a size corresponding to the size of the MEA 312 and are composed of a carbon composite, carbon paper, and/or carbon cloth.

In the fuel cell stack 1110 according to the present embodiment, each electricity generating element 311 includes a conducting element 320, which enables electrical movement of electrons generated in the MEAs 312 through the gas diffusion layers 314a and 314b.

Each conducting element 320 is connected to each gas diffusion layer 314a and 314b and includes a pair of terminal frames 321 and 322, which are partially protruded from the outer edges of the separators 313.

A pair of the terminal frames 321 and 322 are arranged to be opposed to and spaced apart from each other between at least one edge of the separators 313 to connect to each of the gas diffusion layers 314a and 314b in a single electricity generating element 311. The terminal frames 321 and 322 are separated into a first terminal frame 321 and a second terminal frame 322 for purpose of convenience of explanation. The first terminal frame 321 is positioned between the edges of two separators 313 and is protruded partially and outwardly from the separators 313 while contacting the gas diffusion layer 314a. The second terminal frame 322 is positioned between the edges of the two separators 313 and opposing (or facing) the first terminal frame 321. The second terminal frame 322 is protruded partially and outwardly from the separators 313 while contacting the gas diffusion layer 314b.

Each of the terminal frames 321 and 322 has a plate or bar shape, with a predetermined width and a predetermined length, and is mounted between the edges of two separators along an edge of the separators. Each of the terminal frames 321 and 322 is made of conductive carbon material.

The terminal frames 321 and 322 include first portions 321a and 322a substantially contacting each of the gas diffusion layers 314a and 314b, second portions 321 b and 322b protruding outwardly from the edge of the separators 313, and third portions 321c and 322c being closely adjacent to the edge of the separators 313. In addition, the terminal frames 321 and 322 include fourth portions 321d and 322d, which are protruded from the third portions 321c and 322c, and formed on surfaces opposed to the third portions 321c and 322c, that is, on opposing surfaces of the terminal frames 321 and 322, so as to arrange the terminal frames 321 and 322 with a predetermined space therebetween, in a single electricity generating element 311. The terminal frames 321 and 322 can be arranged so that the second portions 321 b and 322b may be protruded outwardly from at least one edge of the separators 313. In FIG. 17, the second portions 321 b and 322b are shown to be protruded outwardly from the four edges of the separators 313.

A first insulating element 323 is interposed at the contacting surface between each of the terminal frames 321 and 322 and each of the separators 313, that is, between the third portions 321c and 322c of the terminal frames 321 and 322 and the edge of the separators 313 to substantially insulate the terminal frames 321 and 322 from the separators 313.

Since the separators 313 are made of metal, and thus the separators 313 may be corroded by heat, moisture, and oxygen during electricity generation of the electricity generating elements 311, thereby increasing electrical resistance. Because of this, electrons generated in each electricity generating element 311 may not be entirely directed to the terminal frames 321 and 322 and may instead be partially (and undesirably) directed to the separators 313 of adjacent electricity generating elements 311 through the separators 313. However, the first insulating elements 323 prevent such undesired movement of the electrons. The first insulating elements 323 are formed in a shape of an insulating tape or insulating sheet and are composed of a synthetic polymer such as phenol resin, polyurethane, polyester resin, polyamide, acryl, urea/melamine resin, and/or silicone resin; and/or a varnish-based material such as varnish.

A second insulating element 324 may be interposed between the terminal frames 321 and 322 to insulate them from each other in each electricity generating element 311.

The second insulating element 324 may be interposed between the first terminal frame 321 and the second terminal frame 322 and, more specifically, between the second portions 321 b and 322b in each electricity generating element 311. The second insulating element 324 may further be interposed between the fourth portions 321 d and 322d of the first terminal frame 321 and the second terminal frame 322 that face (or oppose) each other in each electricity generating element 311. The first terminal frame 321 connected to gas diffusion layer 314a and the second terminal frame 322 connected to gas diffusion layer 314b are electrically connected by a connector 325 to act as (+) and (-) terminals having a predetermined potential difference, in a single electricity generating element 311. The second insulating element 324 insulates areas between the terminals to prevent a short thereof. The second insulating elements 324 are formed in a shape of an insulating tape or insulating sheet and are composed of an insulating material that can be substantially the same as the materials forming the first insulating element 323.

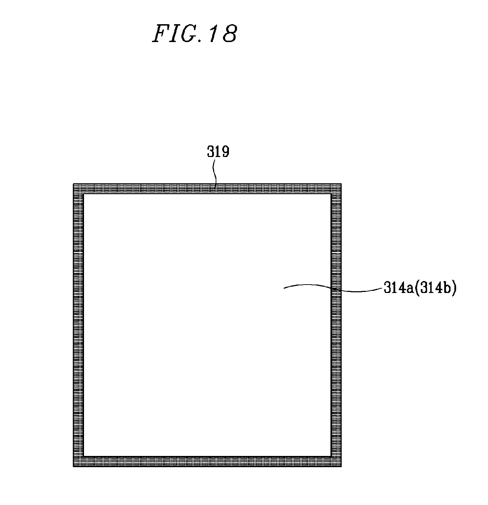

FIG. 18 is a plan diagram illustrating the gas diffusion layers 314a and 314b of FIG. 16. Herein, the gas diffusion layers 314a and 314b include a sealing member 319 at a position corresponding to the edges of the MEAs 312. The sealing member 319 blocks fuel and oxygen from diffusing to outside of the MEAs 312, and leaking to the outside of the electricity generating element 311, when fuel supplied through the fuel passage paths 313a of the separators 313 and oxygen supplied through the oxygen passage paths 313b of the separators 313 are diffused into the first gas diffusion layers 314a and 314b. The sealing member 319 is formed at edge portions of the gas diffusion layers 314a and 314b, corresponding to the edges of the MEAs 312. The sealing member 319 is made of a polymer material; made of polytetrafluoroethylene (TEFLON), polyimide, or the like; and/or made of a rubber material.

The fuel cell stack 1110 includes the connectors 325 as described above, each of which electrically connects an area between a conducting element 320 positioned at one side of one of the electricity generating elements 311 and a conducting element 320 positioned at one side of an adjacent one of the electricity generating elements 311.

The connectors 325 connect electricity generated in adjacent electricity generating elements 311 in series in the entire stack1110. Each of the connectors 325 electrically connect an area between one of the terminal frames 321 and 322 positioned at one side of an electricity generating element 311 and one of the terminal frames 321 and 322 positioned at one side of an adjacent electricity generating element 311.

For this purpose, the connectors 325 are composed of a conductive carbon material and have a block shape, and are mounted between the second portions 321 b and 322b of the terminal frames 321 and 322 of adjacent electricity generating elements 311.

Each of the connectors 325 according to the present embodiment is positioned between the second portion 321 b of the first terminal frame 321 connected to the gas diffusion layer 314a of one of the electricity generating elements 311 and the second portion 322b of the second terminal frame 322 connected to the gas diffusion layer 314b of another electricity generating element 311 of an adjacent one of the electricity generating elements 311.

The fuel cell stack 1110 of the present embodiment includes current collecting plates 327 for collecting electricity at the outermost ends of the stack1110. The current collecting plates 327 are for positioning the plurality of electricity generating elements 311 in close contort with each other by applying a pressure. The current collecting plates 327 are insulated from the outermost separators 313 by third insulating elements 328, as illustrated in FIG. 16. Connectors 325 are mounted between terminal frames 321 and 322, positioned at the outermost ends of the stack 1110 and the current collecting plates 327.

When the fuel cell stack 1110 according to the present embodiment is operated, fuel is supplied to the gas diffusion layers 314a through the fuel passage paths 313a of the separators 313, and then diffused to the anodes of the MEAs 312 through the gas diffusion layers 314a. Also, oxygen is supplied to the gas diffusion layers 314b through the oxygen passage paths 313b of the separators 313, and then diffused to the cathodes of the MEAs 312 through the gas diffusion layers 314b.

Thereby, at the anodes of the MEAs 312, fuel is oxidized to generate electrons and protons. The protons are transferred to the cathodes through electrolyte membranes of the MEAs 312, and the electrons are transferred to the cathodes of adjacent MEA 312 through gas diffusion layers 314a and 314b. Herein, current is generated from the movement of the electrons. At the cathodes of the MEAs 312, electrons, protons transferred from the anodes, and oxygen are reacted to reduce the oxygen and to generate heat and water.

To illustrate in further detail, the terminal frames 321 and 322, connected to the gas diffusion layers 314a and 314b, respectively, are insulated from each other in each of the electricity generating elements 11. The terminal frames 321 and 322 are connected by connectors 325 in series in adjacent electricity generating elements 311. Therefore, the electrons are transferred by the connectors 325 from the terminal frame 321 of one electricity generating element 311 to the terminal frame 322 of another electricity generating element 311. Thus, each electricity generating element 311 generates a current through the movement of the electrons, and applies an electrical energy having a predetermined potential difference to a load, that is, a portable electronic device such as a laptop PC, PDA, or the like, using the current collecting plates 327 positioned at the outermost ends of the stack1110. The fuel cell stack 1110 according to the present embodiment enables electrical coupling between the electricity generating elements 311 through the gas diffusion layers 314a and 314b by the terminal frames 321 and 322, even if the metal forming the separators 313 of the electricity generating elements 311 may be corroded by heat, moisture, and oxygen, which limit the movement of the electrons in the separators 313 and increasing electrical resistance of the separators 313.

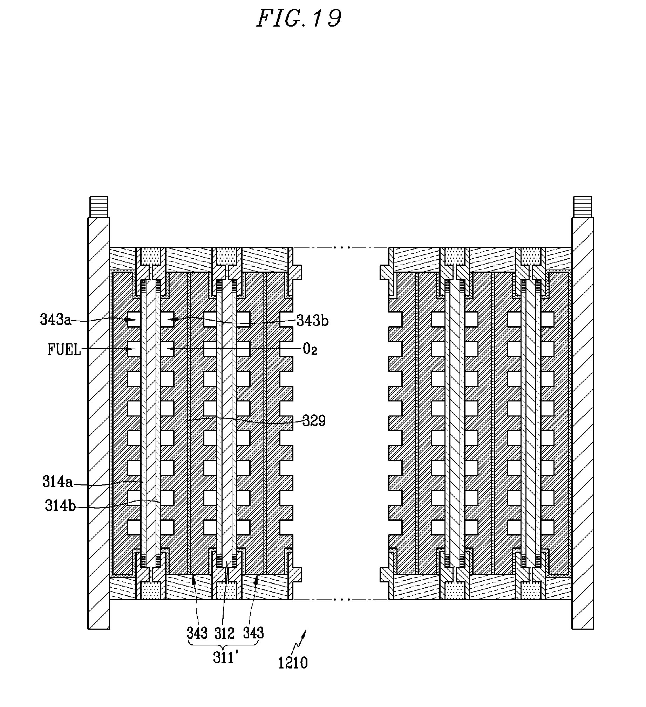

FIG. 19 is a cross-sectional schematic diagram illustrating a fuel cell stack according to a twelfth embodiment of the present invention. In FIG. 19, the same members in FIG. 19 with the same function as the members in FIG. 16 are assigned with the same reference numerals as in FIG. 16.

Referring to FIG. 19, the fuel cell stack 1210, according to the exemplary twelfth embodiment, includes separators 343 facing each other at both sides of the MEAs 12 and having single-sided flow structures, unlike the both-sided structure in the eleventh embodiment. That is, in a single electric generator element 311, a fuel passage path 343a is formed at one side of a separator 343, and an oxygen passage path 343b is formed at one side of an opposing separator 343.

More particularly, one separator 343 of the two opposing separators 343 in a single electricity generating element 311' is positioned substantially adjacent to the gas diffusion layer 314a, which is positioned at one side of the MEA 312. Each separator 343 includes a fuel passage path 343a at one side thereof adjacent to the gas diffusion layer 314a and a flat surface at another side thereof. Another separator 343 is positioned substantially adjacent to the gas diffusion layer 314b, which is positioned at another side of the MEA 312. The another separator 343 includes an oxygen passage path 343b at one side thereof adjacent to the gas diffusion layer 314b and a flat surface at another side.

The flat surfaces of the separators 343 are stacked close to each other so as to arrange the electricity generating elements 311' into the stack1210.

The fuel cell stack 1210 according to the present embodiment includes fourth insulating elements 329 for substantially insulating between adjacent electricity generating elements 311. The fourth insulating elements 329 are interposed between separators 343 of adjacent electricity generating elements 311', that is, between the flat surfaces of the separators 343, and are formed of insulating tape or insulating sheet.

Since the separators 343 are made of metal, and thus the separators 343 may be corroded by heat, moisture, and oxygen during electricity generation of the electricity generating elements 311', thereby increasing electrical resistance. Because of this, the electrons generated in each electricity generating element 311' may not be entirely directed to the gas diffusion layers 314a and 315b and may instead be partially (and undesirably) directed to the separators 343 of adjacent electricity generating elements 311 through the separators 343. However, the fourth insulating elements 329 block this undesired movement of the electrons. The fourth insulating elements 329 are composed of a synthetic polymer such as phenol resin, polyurethane, polyester resin, polyamide, acryl, urea/melamine resin, and/or silicone resin; and/or a varnish-based material such as varnish.

Other elements of the stack 1210 according to the present embodiment are substantially the same as those of the eleventh embodiment, and a fully detailed description of these other elements is omitted.

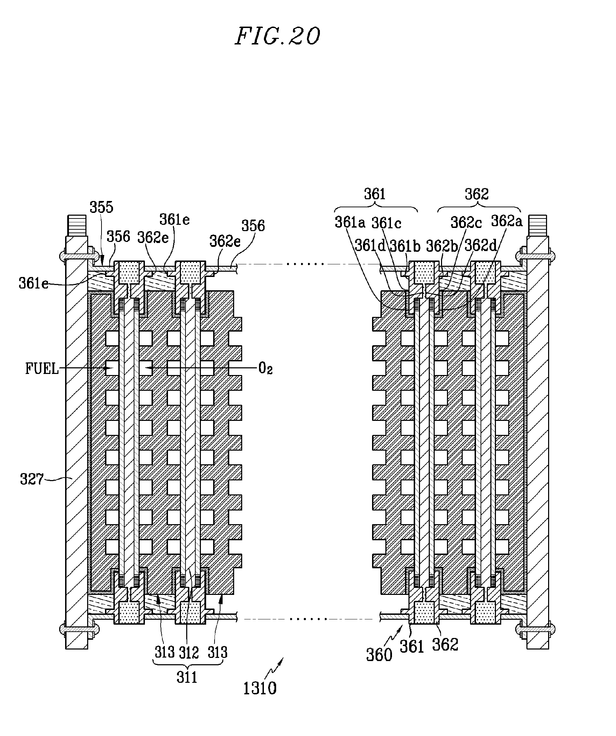

FIG. 20 is a cross-sectional schematic diagram illustrating a fuel cell stack according to a thirteenth embodiment of the present invention. In FIG. 20, the members in FIG. 20 with the same function as the members in FIG. 16 are assigned the same reference numerals as in FIG. 16.

Referring to FIG. 20, the fuel cell stack 1310 according to the present embodiment has substantially the same structure as the eleventh and twelfth embodiments, except that connectors 355 are used in FIG. 20. The connectors 355 include a lead member 356 made of a conductive metal and electrically connect areas between conducting elements 360 of adjacent electricity generating elements 311.

In FIG. 20, the structure of the fuel cell stack 1310 according to the thirteenth embodiment is illustrated for exemplary purposes, and the present invention is not limited to the structure illustrated in FIG. 20.

Each lead member 356 is formed in a shape of a conductive plate, and is positioned between terminal frames 361 and 362 of adjacent electricity generating elements 311. The lead members 356 are made of aluminum, copper, nickel, iron, or alloys thereof

In order to position the lead members 356 between the terminal frames 361 and 362 of adjacent electricity generating elements 311, the opposing terminal frames 361 and 362 include protrusions 361e and 362e, which are integrally formed with the second portions 361 b and 362b.

The lead members 356 are positioned by the protrusions 361e and 362e of the terminal frames 361 and 362 in adjacent electricity generating elements 311, and thus electrically connect the electricity generating elements 311.

The lead members 356 that are positioned between the outermost separators 313 and the current collecting plates 327 are fastened to the current collecting plates 327 through a rivet, or a bolt and nut connection.

Other elements of the stack 1310 according to the present embodiment are substantially the same as those of the eleventh and twelfth embodiments, and thus a detailed description of these other elements is omitted.

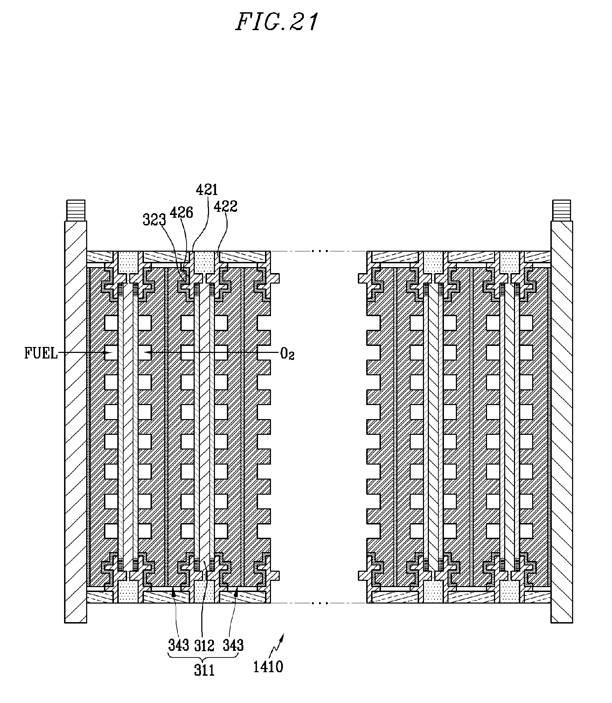

FIG. 21 is a cross-sectional schematic diagram illustrating a fuel cell stack according to a fourteenth embodiment of the present invention. In FIG. 21, the same members in FIG. 21 with the same function as the members in FIG. 19 are assigned with the same reference numerals as in FIG. 19.

Referring to FIG. 21, the fuel cell stack 1410 according to the present embodiment has substantially the same structure as the eleventh, twelfth, and thirteenth embodiments, except that the terminal frames 421 and 422, are used in FIG. 21. The terminal frames 421 and 422 are mounted between the edges of the separators 343, and include connection grooves 426 for connecting between the edges of the separators 343 in each electricity generating element 311.

In FIG. 21, the structure of the fuel cell stack 1410 according to the fourteenth embodiment is illustrated for exemplary purposes, and the present invention is not limited to the structure illustrated in FIG. 21.

The terminal frames 421 and 422 include connection grooves 426 at a position substantially adjacent to the edge of the separators 343. First insulating elements 323 are formed at contacting surfaces between the terminal frames 421 and 422 and the separators 343 to substantially insulate them from each other.

Other elements of the stack 1410 according to the present embodiment are substantially the same as those of the eleventh, twelfth, and thirteenth embodiments and a fully detailed description of these other elements is omitted.

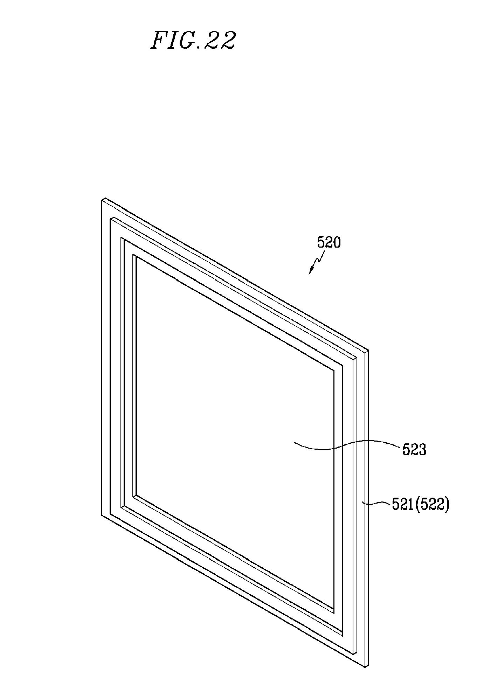

FIG. 22 is a schematic perspective view illustrating a conducting element structure of a fuel cell stack according to a fifteenth embodiment of the present invention.

Referring to FIG. 22, conducting elements 520 include terminal frames 521 and 522 having a square frame shape, while other elements of the fuel cell stack are substantially the same as those described for the above eleventh to fourteenth embodiments.

In the present embodiment, the terminal frames 521 and 522 are formed in a square frame shape having an opening 523 and are partially protruded outwardly from the four edges of the separators (not shown). Other elements of the conducting elements 520 are substantially the same as the terminal frames of the above described embodiments and thus a detailed description of these other elements is omitted.

According to the above described embodiments of the present invention, separators are made of a metal or a non-conductive (or low-conductive) material, and thus the molding of the separators is easy and separator thickness can decrease. Therefore, preparation cost of a stack and a stack volume can be reduced.

According to the present invention, electricity generating elements are electrically connected through conducting elements or terminal frames, and thus the problems of deterioration of stack performance and reduction of life-span are prevented, even if the separators are made of metal that are corroded by heat, moisture, oxygen, or the like, and/or have increase electrical resistance.

While the invention has been described in connection with certain exemplary embodiments, it is to be understood by those skilled in the art that the invention is not limited to the disclosed embodiments, but, on the contrary, is intended to cover various modifications included within the spirit and scope of the appended claims and equivalents thereof.

## Claims

1. A fuel cell stack, comprising:
at least one electricity generating element adapted to generate electrical energy through a reaction of fuel and oxygen, wherein the electricity generating element comprises:
a membrane-electrode assembly;
a plurality of separators respectively positioned at both sides of the membrane-electrode assembly; and
a conducting element positioned between each of the separators and the membrane-electrode assembly, the conducting element enabling electrons generated in the membrane-electrode assembly to transfer through the fuel cell stack.

2. The fuel cell stack of claim 1, wherein the conducting element comprises:
at least one gas diffusion layer positioned between each of the separators and the membrane-electrode assembly; and
at least one region extended from the gas diffusion layer, adjacent to a corresponding one of the separators and outside of at least one edge of the corresponding one of the separators, the region extended being a terminal region.

3. The fuel cell stack of claim 1, further comprising a connector connected to the conducting element and another conducting element of another electricity generating element, the connector electrically connecting an area between the conducting element and the another conducting element.

4. The fuel cell stack of claim 1, further comprising a first insulating element adapted to substantially insulate the conducting element of the electricity generating element to prevent an electrical short circuit within the electricity generating element.

5. The fuel cell stack of claim 1, further comprising current collecting plates respectively positioned adjacent to outermost ones of the separators and electrically connected to the conducting element of the outermost ones of the separators.

6. The fuel cell stack of claim 5, further comprising second insulating elements positioned between the outermost ones of the separators and the current collecting plates to substantially insulate them.

7. The fuel cell stack of claim 2, wherein:
the electricity generating element is stacked adjacent to another electricity generating element to form a stack structure, and
a connector is positioned between the terminal region of the electricity generating element and a terminal region of the another electricity generating element to connect the electricity generating element and the another electricity generating element in series.

8. The fuel cell stack of claim 7, wherein the connector is made of a conductive carbon material having a block shape, and is mounted between the terminal regions.

9. The fuel cell stack of claim 7, wherein the connector is made of at least one conductive metal selected from the group consisting of aluminum, copper, nickel, iron, and alloys thereof.

10. The fuel cell stack of claim 9, wherein the connector comprises a rivet for substantially connecting the terminal regions.

11. The fuel cell stack of claim 10, further comprising a washer mounted between the connector and each of the terminal regions.

12. The fuel cell stack of claim 9, wherein the connector comprises a bolt and a nut for substantially connecting the terminal regions.

13. The fuel cell stack of claim 12, further comprising a washer mounted between the connector and each of the terminal regions.

14. The fuel cell stack of claim 1, wherein the separators are made of a metal material.

15. The fuel cell stack of claim 2, wherein the separators comprise:
a fuel passage path positioned adjacent to a first gas diffusion layer contacting one side of the membrane-electrode assembly; and
an oxygen passage path positioned adjacent to a second gas diffusion layer contacting another side of the membrane-electrode assembly.

16. The fuel cell stack of claim 15, wherein each of the separators includes a fuel passage path on one side thereof and an oxygen passage path on another side thereof.

17. The fuel cell stack of claim 15, wherein:
the electricity generating element is stacked adjacent to another electricity generating element to form a stack structure, and
a third insulating element is positioned between one of the separators of the electricity generating element and an adjacent separator of the another electricity generating element to substantially insulate the one of the separators of the electricity generating element and the adjacent separator of the another electricity generating element.

18. The fuel cell stack of claim 15, wherein the passage paths of the separators are formed by press-processing a plate-shaped metal.

19. The fuel cell stack of claim 14, wherein each of the separators is made of at least one metal selected from the group consisting of aluminum, copper, iron, nickel, cobalt, and alloys thereof.

20. The fuel cell stack of claim 1, wherein each of the separators is made of a low-conductive material having a lower conductivity than a carbon material.

21. The fuel cell stack of claim 20, wherein the low-conductive material is selected from the group consisting of a ceramic material, a polymer material, a synthetic resin material, a rubber material, and combinations thereof.

22. The fuel cell stack of claim 2, wherein the gas diffusion layer is made of at least one material selected from the group consisting of carbon composite sheet, carbon paper, and carbon cloth.

23. The fuel cell stack of claim 1, wherein the conducting element comprises:
a plurality of gas diffusion layers respectively disposed to oppose each other at both sides of the membrane-electrode assembly; and
a region extended from each of the gas diffusion layers and outside of at least one edge of the separators,
the extended region being a terminal region.

24. The fuel cell stack of claim 23, wherein the conducting element further comprises a sealing member adapted to block the fuel and/or oxygen from diffusing out of the membrane-electrode assembly.

25. The fuel cell stack of claim 24, wherein the sealing member is formed at a corresponding edge of the membrane-electrode assembly and is made of a polymer material and/or a rubber material.

26. The fuel cell stack of claim 1, wherein the conducting element comprises:
a plurality of multi-layered gas diffusion layers respectively disposed to oppose each other at both sides of the membrane-electrode assembly, each of the plurality of multi-layered gas diffusion layers having an outermost gas diffusion layer and an inner gas diffusion layer, and
a region extended from the outermost gas diffusion layer contacting a corresponding one of the separators and outside of at least one edge of the corresponding one of the separators, the region extended being a terminal region.

27. The fuel cell stack of claim 26, wherein the inner gas diffusion layer contacts the membrane-electrode assembly and comprises a first sealing member adapted to block the fuel and/or oxygen from diffusing out of the membrane-electrode assembly.

28. The fuel cell stack of claim 27, wherein the first sealing member is formed at an edge of the inner gas diffusion layer corresponding to an edge of the membrane-electrode assembly and is made of a polymer material and/or a rubber material.

29. The fuel cell stack of claim 26, wherein the outermost gas diffusion layer contacting the corresponding one of separators comprises a second sealing member adapted to block the fuel and/or oxygen from diffusing out of the membrane-electrode assembly.

30. The fuel cell stack of claim 29, wherein the second sealing member is formed at a position corresponding to an edge of the membrane-electrode assembly and is made of a polymer material and/or a rubber material.

31. A fuel cell stack, comprising:
at least one electricity generating element adapted to generate electrical energy through a reaction of fuel and oxygen, wherein the electricity generating element comprises:
a membrane-electrode assembly;
a plurality of separators respectively positioned at both sides of the membrane-electrode assembly; and
a conducting element substantially surrounding each of the separators, the conducting element enabling electrons generated in the membrane-electrode assembly to transfer through the fuel cell stack.

32. The fuel cell stack of claim 31, wherein the conducting element includes a gas diffusion layer comprising a plurality of portions respectively positioned adjacent to both sides of each of the separators, and integrally connected with each other.

33. The fuel cell stack of claim 32, wherein the gas diffusion layer comprises:
a first portion positioned adjacent to one side of each of the separators;
a second portion positioned adjacent to another side of each of the separators; and
a third portion adapted to integrally and electrically connect the first portion with the second portion.

34. The fuel cell stack of claim 33, wherein the first portion and the second portion comprise a sealing member adapted to block the fuel and/or oxygen from diffusing out of the membrane-electrode assembly.

35. The fuel cell stack of claim 34, wherein the sealing member is formed at edges of the first portion and the second portion corresponding to an edge of the membrane-electrode assembly and is made of a polymer material and/or a rubber material.

36. The fuel cell stack of claim 33, wherein the gas diffusion layer comprises a bending member at a connection between the first portion and the third portion and between the second portion and the third portion to bend the first portion and the second portion.

37. The fuel cell stack of claim 36, wherein the bending member is made of a material selected from the group consisting of a polymer material, a rubber material, and a metal material.

38. The fuel cell stack of claim 31, further comprising a first insulating element adapted to substantially insulate the conducting element to prevent an electrical short circuit within the electricity generating element.

39. The fuel cell stack of claim 31, further comprising a current collecting plate, the current collecting plate being positioned adjacent to the conducting element substantially surrounding outermost ones of the separators and electrically connected to the conducting element substantially surrounding the outermost ones of the separators.

40. The fuel cell stack of claim 39, further comprising an second insulating element inserted between an outermost portion of the conducting element and a corresponding one of the separators to substantially insulate the outermost portion of the conducting element and the corresponding one of the separators.

41. The fuel cell stack of claim 32, wherein the separators comprise:
a fuel passage path positioned adjacent to a first gas diffusion layer contacting one side of the membrane-electrode assembly; and
an oxygen passage path positioned adjacent to a second gas diffusion layer contacting another side of the membrane-electrode assembly.

42. The fuel cell stack of claim 41, wherein each of the separators includes a fuel passage path on one side thereof and an oxygen passage path on another side thereof.

43. The fuel cell stack of claim 41, wherein:
the electricity generating element is stacked adjacent to another electricity generating element to form a stack structure, and
a third insulating element is positioned between one of the separators of the electricity generating element and an adjacent separator of the another electricity generating element to substantially insulate the one of the separators of the electricity generating element and the adjacent separator of the another electricity generating element.

44. The fuel cell stack of claim 31, wherein each of the separators is made of at least one material selected from the group consisting of a ceramic material, a polymer material, a synthetic resin material, a rubber material, a metal material, and combinations thereof.

45. A fuel cell stack, comprising:
at least one electricity generating element adapted to generate electrical energy through a reaction of fuel and oxygen, wherein the electricity generating element comprises:
a membrane-electrode assembly;
a plurality of separators respectively positioned at both sides of the membrane-electrode assembly;
a plurality of gas diffusion layers respectively positioned between the separators and the membrane-electrode assembly to oppose each other; and
a plurality of conducting elements respectively connected to the gas diffusion layers to enable electrons generated in the membrane-electrode assembly to transfer through the fuel cell stack.

46. The fuel cell stack of claim 45, wherein the conducting elements comprise terminal frames interposed between the separators and the gas diffusion layers, the terminal frames contacting the gas diffusion layers and having regions protruded out of at least one edge of the separators, the protruded regions being terminal regions.

47. The fuel cell stack of claim 45, further comprising a connector mounted to connect to the conducting elements and another conducting element of another electricity generating element, the connector electrically connecting an area between the conducting element and the another conducting element.

48. The fuel cell stack of claim 45, wherein each of the separators is made of at least one material selected from the group consisting of a ceramic material, a polymer material, a synthetic resin material, a rubber material, a metal material, and combinations thereof.

49. The fuel cell stack of claim 46, wherein each of the terminal frames is made of a conductive carbon material.

50. The fuel cell stack of claim 49, wherein each of the terminal frames is a bar shaped frame having a predetermined width and a predetermined length, and comprises a first portion positioned adjacent to a corresponding one of the gas diffusion layers and a second portion protruding out of at least one edge of the separators.

51. The fuel cell stack of claim 50, wherein each of the terminal frames comprises a connection groove to connect edges of the separators.

52. The fuel cell stack of claim 49, wherein each of the terminal frames is a square frame having an opening, and comprises:
a first portion positioned adjacent to a corresponding one of the gas diffusion layers; and
a second portion protruding out of at least one edge of the separators.

53. The fuel cell stack of claim 52, wherein each of the terminal frames comprises a connection groove to connect edges of the separators.

54. The fuel cell stack of claim 46, wherein:
the electricity generating element is stacked adjacent to another electricity generating element to form a stack structure, and
the stack structure comprises a connector mounted between the protruded regions of the terminal frames to connect the electricity generating elements in series.

55. The fuel cell stack of claim 54, wherein the terminal frames are made of a conductive carbon material having a block shape.

56. The fuel cell stack of claim 54, wherein the connector comprises a lead member composed of a conductive plate-shaped metal.

57. The fuel cell stack of claim 56, wherein the terminal frames comprise a protrusion for positioning the lead member.

58. The fuel cell stack of claim 57, wherein the lead member is made of at least one material selected from the group consisting of aluminum, nickel, copper, iron, and alloys thereof.

59. The fuel cell stack of claim 46, further comprising first insulating elements interposed between the terminal frames and the separators to substantially insulate the terminal frames from the separators.

60. The fuel cell stack of claim 46, further comprising second insulating elements adapted to substantially insulate an area between the terminal frames in the electricity generating element to prevent an electrical short circuit within the electricity generating element.

61. The fuel cell stack of claim 46, further comprising current collecting plates positioned adjacent to outermost ones of the separators, and electrically connected to outermost ones of the terminal frames.

62. The fuel cell stack of claim 61, further comprising third insulating elements positioned between the outermost ones of the separators and the current collecting plates to substantially insulate the current collecting plates from the outermost ones of the separators.

63. The fuel cell stack of claim 45, wherein the separators comprise:
a fuel passage path positioned adjacent to a first gas diffusion layer contacting one side of the membrane-electrode assembly; and
an oxygen passage path positioned adjacent to a second gas diffusion layer contacting another side of the membrane-electrode assembly.

64. The fuel cell stack of claim 63, wherein each of the separators includes a fuel passage path on one side thereof and an oxygen passage path on another side thereof.

65. The fuel cell stack of claim 63, wherein:
the electricity generating element is stacked adjacent to another electricity generating element to form a stack structure, and
a fourth insulating element is positioned between one of the separators of the electricity generating element and an adjacent separator of the another electricity generating element to substantially insulate the one of the separators of the electricity generating element and the adjacent separator of the another electricity generating element.

66. The fuel cell stack of claim 45, wherein the gas diffusion layers comprise sealing members to block the fuel and/or oxygen from diffusing out of the membrane-electrode assembly.

67. The fuel cell stack of claim 66, wherein each of the sealing members is formed at a position corresponding to an edge of the membrane-electrode assembly and is made of a polymer material and/or a rubber material.

68. A fuel cell stack adapted to generates electrical energy through a reaction of fuel and oxygen, the stack comprising:
a membrane-electrode assembly;
a first separator positioned at a first side of the membrane-electrode assembly;
a second separator positioned at a second side of the membrane-electrode assembly;
a first conducting element positioned between the first separator and the membrane-electrode assembly; and
a second conducing element positioned between the second separator and the membrane-electrode assembly,
wherein the first conducting element and the second conducting element enable electrons generated in the membrane-electrode assembly to provide a current to a current receiving load.

69. The fuel cell stack of claim 68, wherein the first conducting element comprises a gas diffusion layer positioned between the first separator and the membrane-electrode assembly and a terminal region extended from the gas diffusion layer adjacent to the first separator and outside of at least one edge of the first separator.

70. The fuel cell stack of claim 68, wherein the first conducting element includes a gas diffusion layer comprising a first portion, a second portion, and a third portion, the first portion and the second portion being respectively positioned adjacent to both sides of the first separator and integrally connected to each other through the third portion.

71. The fuel cell stack of claim 68, further comprising
a first diffusion layer positioned between the first separator and the membrane-electrode assembly; and
a second diffusion layer positioned between the second separator and the membrane-electrode assembly,
wherein the first conducting element is connected to the first gas diffusion layer and the second conducting element is connected to the second diffusion layer.

72. The fuel cell stack of claim 71, wherein the first conducting element comprises a terminal frame interposed between the first separator and the first gas diffusion layer, the terminal frame contacting the first gas diffusion layer and having a terminal region protruded out of at least one edge of the first separator.

73. The fuel cell stack of claim 68, wherein the first separator comprises a material selected from the group consisting of a ceramic material, a polymer material, a synthetic resin material, a rubber material, a metal material, and combinations thereof.

74. The fuel cell stack of claim 68, further comprising an insulating element between a terminal region of the first conducting element and a terminal region of the second conducting element, the insulating element preventing an electrical short circuit between the terminal region of the first conducting element and the terminal region of the second conducting element.

75. The fuel cell stack of claim 68, further comprising:
a first electricity generating element, the first electricity generating element including the membrane-electrode assembly, the first separator, and the second separator;
a second electricity generating element stacked adjacent to the first electricity generating element to form a stack structure; and
a connector between the first conducting element and a third conducting element of the second electricity generating element to electrically connect the first electricity generating element and the second electricity generating element in series.
